(19) **Europäisches Patentamt / European Patent Office / Office européen des brevets**

(11) **EP 3 497 491 B1**

(12) # EUROPEAN PATENT SPECIFICATION

(45) Date of publication and mention
of the grant of the patent:
**13.09.2023  Bulletin 2023/37**

(21) Application number: **17772297.2**

(22) Date of filing: **03.08.2017**

(51) International Patent Classification (IPC):
**G02B 5/18** *(2006.01)*      **B42D 25/328** *(2014.01)*

(52) Cooperative Patent Classification (CPC):
**G02B 5/1819; B42D 25/324; B42D 25/328;
G02B 5/1861; G02B 27/4233**

(86) International application number:
**PCT/CZ2017/050034**

(87) International publication number:
**WO 2018/028724 (15.02.2018 Gazette 2018/07)**

(54) **METHOD OF PREPARING AN OPTICALLY VARIABLE IMAGE DEVICE**

VERFAHREN ZUR HERSTELLUNG EINER OPTISCH VARIABLEN BILDVORRICHTUNG

PROCÉDÉ DE PRÉPARATION D'UN DISPOSITIF D'IMAGE OPTIQUEMENT VARIABLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **08.08.2016  CZ 20160479**

(43) Date of publication of application:
**19.06.2019  Bulletin 2019/25**

(73) Proprietor: **Ustav Pristrojove Techniky AV CR,
V.V.I.
61264 Brno (CZ)**

(72) Inventors:
- **HORACEK, Miroslav
  63400 Brno (CZ)**
- **KOLARIK, Vladimir
  60200 Brno (CZ)**

(74) Representative: **Zemanová, Veronika
Kania, Sedlak, Smola
Patent Attorneys
Mendlovo namesti 1 a
603 00 Brno (CZ)**

(56) References cited:
**EP-A1- 2 180 358        EP-A1- 2 879 883
WO-A1-2014/124829    DE-A1-102007 009 646**

- **Hirst, D.: "Damien Hirst (b. 1965) | Valium | Prints
  & Multiples, England | Christie's", , 31 December
  2000 (2000-12-31), XP055424517, Retrieved from
  the Internet:
  URL:http://www.christies.com/lotfinder/Lot
  /damien-hirst-b-1965-valium-5543782-detail
  s.aspx [retrieved on 2017-11-14]**
- **MIHAILESCU M ET AL: "Diffraction patterns from
  a phyllotaxis-type arrangement", OPTICS AND
  LASERS IN ENGINEERING, ELSEVIER,
  AMSTERDAM, NL, vol. 46, no. 11, 1 November
  2008 (2008-11-01), pages 802-809, XP024525352,
  ISSN: 0143-8166, DOI:
  10.1016/J.OPTLASENG.2008.06.004 [retrieved on
  2008-07-10]**

## Description

### Field of the Invention

The present invention relates to a method of preparing an optically variable image device assuming a form of a planar structure that is characterised by being based on the function of optical primitives arranged in accordance with a graphical phyllotactic model (the invention does not relate to a displaying device). Under prevalent conditions, such device having a fixed structure enables the observer to obtain a desired visual perception, an optically variable image perception being obtainable under changing conditions of observation or illumination. The desired visual perception comprises at least two different images, the first one corresponding to a respective characteristic phyllotactic pattern and the second one corresponding to a respective desired graphical pattern.

### Background of the Invention

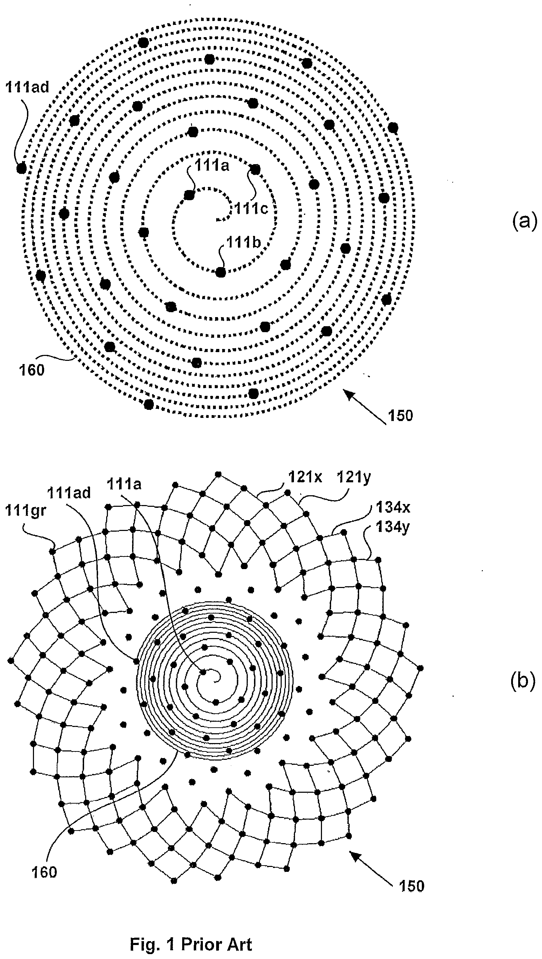

Phyllotaxy is the mode of arrangement of parts of plants (such as leaves along a plant stem, perianth leaves, seeds in a flower head etc.). There are several known models describing such arrangements. An exemplary model was designed by VOGEL (VOGEL, H., A Better Way to Construct the Sunflower Head. Mathematical Biosciences 44: 179-189. (1979)). The basis of this model describing arrangement of seeds in a flower head, including the basic spiral, is shown in Figure 1 (a). A model comprising an increased number of seeds is shown in Figure 1 (b), wherein two sets of derived spirals are indicated (one set for each 21st seed and one set for each 34th seed) besides the basic cyclotron spiral. The mathematical description of this model is based on the relations defining the location of the seed by means of polar coordinates ($r$, $theta$) and in dependence on the order $k$ of the seeds in a sorted array.

$$r_k = c \, . \, k^{1/2} \qquad\qquad (1a)$$

$$theta_k = k \, . \, theta_0 \qquad\qquad (1b)$$

Within the above relation, $theta_0$ is a rotational parameter and $c$ is a scale parameter. The author VOGEL suggests choosing a constant relation $theta_0$ = 2 . pi / FI$^2$, wherein FI = ( sqrt ( 5 ) + 1 ) / 2, i.e. a constant rotational parameter assuming the value 137.5 degrees for achieving an azimuthally uniform arrangement.

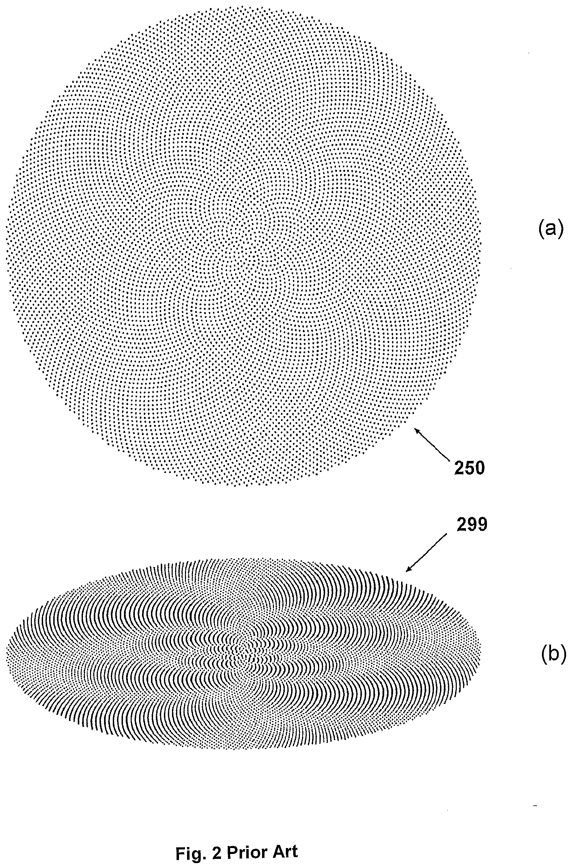

A utilization of such a model for visual reference comparisons of the quality of exposures carried out by means of a recorder using an electron beam was published by MELUZIN (MELUZIN, P. et al., Some Other Gratings: Benchmarks for Large-Area E-Beam Nanopatterning, NANOCON 2014, 6th International conference proceedings, Ostrava: TANGER, 2014, ISBN 978-80-87294-55-0). The latter publication describes, among others, an image of a diffraction pattern of a phyllotactic model, said image being observable when the mesh comprising the elements of the phyllotactic model is sufficiently dense and extensive. Such pattern is peculiar to a given phyllotactic model, as shown in Figure 2. Figure 2 (a) shows the positions of the seeds according to the above mentioned model, the number of the seeds within this more extensive model being 10,000. A close observation makes it possible to recognize the fine strokes of the derived spirals (such spirals include particularly those appearing close to the edge of the circular area and comprising each 144th and each 233rd seed, respectively). In this connection, Figure 2 (a) shows a pattern that is recognizable when observing this model, i.e. that shown in Figure 2 (a) at a very wide viewing angle. However, the latter publication does not further deal with any possible method of utilizing a mesh of a phyllotactic model for creating a selected image for a particular device type, such as a DOVID (*Diffractive Optically Variable Image Device*).

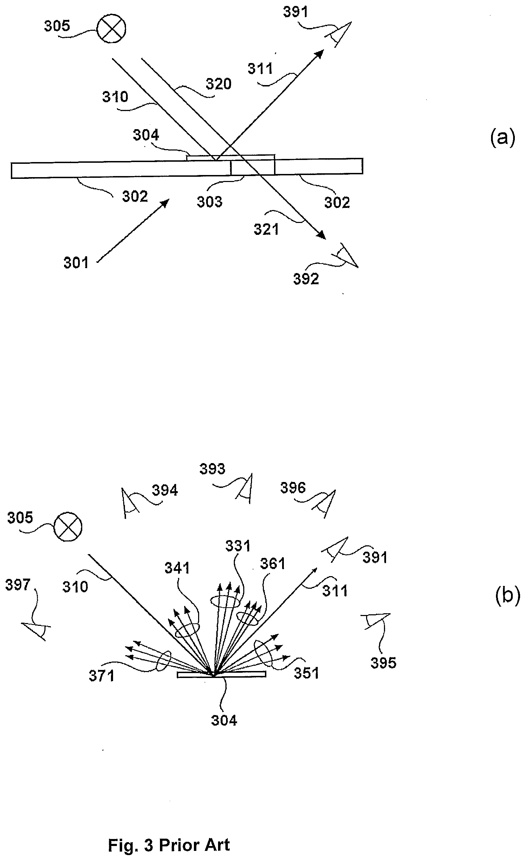

Diffractive optically variable image devices make use of light diffraction on a regular structure, different parts of the obtained image being based on diffractive elements (such as grids) having specific parameters. When suitable parameters and locations of such elements are chosen, the image created by a DOVID device can invoke a diffractive visual perception that is typically variable when the observing conditions are changing, e.g. when the DOVID device is turned or tilted by the observer. Such devices are frequently used for creating protective elements of documents, tokens of value, identity cards, fee stamps or the like. A thorough overview of these elements is elaborated, for example, in the publication by RENESSEE (RENESSEE, Rudolf L. van, Optical Document Security, 3rd edition, Artech House, Boston/London (2005), 386 pages, ISBN 1-58053-258-6), including references to tens of patents and hundreds of expert articles. Figure 3 shows various simplified configurations for observing a diffractive image; also shown are various directions in which the observer can see the image when a constant location of the light source and a constant location and orientation of the DOVID device, respectively, is selected. Further known variants of the DOVID device present structures, which are based on delineated contour lines of a three-dimensional object obtained by means of diffraction or refraction lines; actually, a simple Fresnel construction is concerned wherein the macro surface of the respective object is replaced with Fresnel zones or with diffractive Fresnel zones in the course of the implementation. An exemplary disclosure is contained in the patent application WO2006013215A1.

The above list of known methods and processes is far from being exhaustive but it will be sufficient for a basic introduction into the particular topic. In the area of document security as well as in the area of the decorative usage of diffractive elements, there is an obvious unceasing effort to look for new methods which would enable to devise a device providing different perceptions when compared to the known, established methods. Moreover, the area of document security incessantly requires new approaches which would fulfil the basic demand more efficiently, namely the necessity of mitigating the contradiction between the desired simplicity of an authentication of documents on the one hand and the prevention of counterfeiting the same or, at least making such counterfeiting significantly more difficult, on the other hand.

WO2014124829A1 (PROGENIO AG) discloses a graphic pattern having spiral arrangement, EP2879883A1 (API OPTIX S R O), EP2180358 (GIESECKE & DEVRIENT GMBH) and DE102007009646A1 (GIESECKE & DEVRIENT GMBH) disclose DOVIDs containing pixels arranged along Cartesian coordinate system, and Damian Hirst's Valium is a drawing inspired by phyllotaxis. "Diffraction patterns from a phyllotaxis-type arrangement" by M. Mihailescu at al. discloses a diffractive element based on phyllotaxis spiral.

### Summary of the Invention

The invention is defined in the appended claims.

The above objective is fulfilled by a method, by means of which there is provided an optically variable image device assuming the form of a planar optical structure, wherein the device comprises at least one planar primary area corresponding to a primary area of a final graphic template including a mesh of graphical elements, said mesh having been constructed by projecting a series of spatially deployed seeds into the plane of a primary graphic template, wherein each of the seeds is defined by

a) its basic order;
b) a triplet of initial spatial coordinates derived from a three-dimensional phyllotactic model;
c) a set of modifiable attributes having their initial values derived from a seed model,

within said primary area of a primary graphic template comprising a mesh of graphical elements there is arranged in accordance with a graphic pattern at least one secondary subarea formed through a modification of the mesh of graphical elements in the respective secondary subarea, wherein the individual graphical elements of the primary area of the resulting graphic template are represented by micro and/or nano optical primitives or by sets thereof constituting said primary area of the planar optical structure, such that an impinging light by interacting with said planar optical structure creates a visual perception of one image corresponding to a characteristic pattern of the respective combination of said three-dimensional phyllotactic model and said seed model and, simultaneously, a different visual perception of another image or images corresponding to said graphic pattern.

Advantageously, the observable image provided by the device will at least partly maintain an approximate self-similarity of the image provided by the initial phyllotactic model.

It is also advantageous when the observable image provided by the above device can at least partly maintain a rotational invariance of the image provided by the initial phyllotactic model.

Advantageously, the mutual spacing of said graphical elements ranges from approximately ten nanometres to approximately ten millimetres.

According to an advantageous embodiment the optically variable image device comprises at least one tertiary subarea within said primary area and the tertiary subarea includes at least one of the following optical elements: microtext, micrographics, computer generated hologram, micro-optical element, micro-lens, micro-mirror.

Preferably, the tertiary subarea comprises a graphical micro element such as micro graphics or a microtext, obtained by projecting a local orthogonal grid, in which such micro element has been prepared, into a local mesh comprising graphical elements, a recognizable modification of the shape of said micro element occurring in least one portion of said subarea, said modification being peculiar to said local mesh comprising graphical elements.

In another advantageous embodiment, another portion of said tertiary subarea contains a micro element arranged within the local orthogonal grid and pre-treated in a manner enabling said modification of the shape of said element and the rotational position of the same to be corrected.

It is also advantageous when the tertiary subarea includes a coded structure, such as a computer generated hologram, obtained by projecting a local orthogonal grid, in which such coded structure has been prepared, into a local mesh comprising graphical elements, a recognizable distortion of the Fourier image of said coded structure occurring in at least one portion of said subarea, said distortion being peculiar to the given local mesh comprising graphical elements. According to a further advantageous embodiment, another portion of said subarea contains said coded structure which has been prepared in the local orthogonal grid and calculated in a manner enabling said distortion of the Fourier image to be rectified.

According to still another advantageous embodiment, the tertiary subarea includes a combination of a microelement, such as a graphical micro element or a microtext, and a coded phase structure, such as a computer generated hologram, said combination enabling a cyclic freedom of a multiple wavelength to be used for distinguishing the positive portions of the micro element from the negative ones when performing a calculation of said coded phase structure.

According to yet another advantageous embodiment, the tertiary subarea, which has a macroscopic size, includes a microelement, such as a graphical micro element or a microtext, enabling a visually observable additional image or a coarse microscopically observable additional image to be obtained by selecting local positive and negative forms of said microelement.

In a particularly advantageous embodiment an optically variable image device is formed using at least two different meshes, which are either entirely separated from each other or arranged in at least partial mutual abutment. Alternatively or additionally, the device is formed using at least two different meshes that at least partly overlap each other in at least one quaternary subarea.

The above mentioned mutual overlap of the meshes can be sharp, stepwise sharp and/or gradual in said quaternary subarea.

Said quaternary subarea is advantageously formed by at least two different meshes, the centres of the models of such meshes being coincident.

Advantageously, the quaternary subarea is formed by at least two meshes having different densities, at least one finer mesh defining an ordered series of graphical elements and, simultaneously, at least one coarser mesh being utilized for constructing at least one secondary and/or at least one tertiary subarea.

According to another advantageous embodiment, the quaternary subarea is formed by one coarse mesh within which the positions and numbers of the graphical elements form the midpoints for a set of fine meshes provided in a corresponding number.

The above objective is fulfilled by a method of preparing an optically variable image device as defined in claim 1, wherein the method comprises the following steps:

> A) at least one plurality of seeds arranged in an initial row is prepared by means of a three-dimensional phyllotactic model defining locations of said seeds in an initial area and a seed model defining properties of said seeds, wherein each of said seeds is defined by
>
>> a) its basic order;
>> b) a triplet of initial spatial coordinates derived from said three-dimensional phyllotactic model;
>> c) a set of modifiable attributes having their initial values derived from said seed model,
>
> B) subsequently, the group of seeds is projected into the plane of a primary graphic template to obtain a planar primary area, said primary area being filled with a mesh of primary graphical elements, which correspond to the initial seeds,
> C) further, at least one secondary subarea is selected within said primary area, which comprises the mesh of graphical elements, the selection being made using a graphical pattern, and then a secondary transformation of the mesh of graphical elements is performed in said secondary subarea to obtain a transformed mesh of graphical elements within the secondary subarea,
> D) subsequently, the obtained row of graphical elements is converted into an implementation sequence and the individual graphical elements are converted into micro and/or nano optical primitives or into sets of such primitives using a relief technique, such that an impinging light by interacting with said planar optical structure creates a visual perception of one image corresponding to a characteristic pattern of the respective combination of said three-dimensional phyllotactic model and said seed model and, simultaneously, a different visual perception of another image or images corresponding to said graphic pattern.

Advantageous embodiments of the invention are defined in the dependent claims.

In step C) the initial series of graphical elements in said subarea is transformed for obtaining a secondary subarea, wherein the transformation, is a transformation of at least one of the following three types:

> a) a change in the density of the mesh comprising graphical elements,
> b) a transformation of the mesh of the graphical elements into a generally non-orthogonal and/or irregular web;
> c) a change of attribute values of the graphical elements.

In step D) the graphical elements of the primary area and/or the secondary subarea are transformed in micro- and/or nano optical primitives or their pluralities, forming a planar optical structure such, that they form at least partially a rotationally invariant optical perception, which corresponds to the initial phyllotactic model from step A).

According to another embodiment, the step C) additionally comprises a selection of at least one further subarea within said planar primary area and subsequently at least one of the following optical elements is created within said further subarea in order to obtain a tertiary subarea: microtext, micrographics, computer generated hologram, micro-optical element, micro-lens, micro-mirror.

Advantageously, said at least one further subarea contains an object, such as a microtext or micrographics, created by transforming the orthogonal grid of said object into a mesh comprising graphical elements within the given subarea to obtain a tertiary subarea, so that

    a) in at least one portion of the tertiary subarea, the final shape of the microtext or micrographics is modified into a form that is characteristic for the mesh comprising graphical elements in the above mentioned subarea of the primary planar area, and/or

    b) in at least one portion of the tertiary subarea, the microtext or micrographics is modified before or after the transformation of its orthogonal grid into a mesh comprising graphical elements, said modification enabling a distortion of said microtext or micrographics to be compensated.

Advantageously, the tertiary subarea is obtained by creating combination of a microelement, such as a graphical micro element or a microtext, and a coded phase structure, such as a computer generated hologram, said combination enabling the cyclic freedom of a multiple wavelength to be used for distinguish the positive portion of the micro element from the negative ones when performing a calculation of said coded phase structure.

According to a particularly advantageous embodiment, the step A) comprises the preparation of at least two meshes for the three-dimensional phyllotactic model, followed by performing the steps B) to D) for at least one of said meshes and performing at least the step B) for the other of said meshes, the primary planar areas obtained in the step B) being arranged close to each other or with a mutual spacing.

According to another particularly advantageous embodiment, the step A) comprises the preparation of at least two meshes for the three-dimensional phyllotactic model, followed by performing the steps B) to D) for at least one of said meshes and performing at least the step B) for the other of said meshes, the primary planar areas obtained in the step B) being arranged with a partial mutual overlap, the individual portions of said overlap forming a quaternary subarea. Advantageously, the midpoints of the pair of the meshes of the three-dimensional phyllotactic model can be coincident.

The optically variable image device is based on the use of a homogeneous mesh of a phyllotactic model for creating an optically variable image within a defined area, said area further comprising several subareas, each of said subareas being implemented in a different manner which, nevertheless, enables the homogeneity of the initial arrangement of the phyllotactic model to be maintained.

The invention is described by means of three mutually related objects: a geometric or graphic template, a planar optical structure and an image that is recognizable for the observer. An array of such objects is referred to as an entity, such as a primary graphic template, a primary structure, a primary image etc. Simultaneously, a hierarchical arrangement of the elements, namely on a macro level, micro level and nano level, is used for descriptive purposes.

The initial arrangement is based on an ordered group $_0K$ of initial seeds, said seeds being orderly arranged along the basic spiral of the phyllotactic model, the origin of said spiral being referred to as the pole of the phyllotactic model. A three-dimensional phyllotactic model assigns a unique triplet of coordinates to each $k$-th, e.g. with the use of a Cartesian coordinate system $\{_0x_k\ _0y_k\ _0z_k\}$. Similarly, coordinate triplets based on other usual systems can be considered, e.g., on a cylindrical coordinate system (triplet $\{_0r_k\ _0theta_k\ _0z_k\}$) or on a spherical coordinate system (triplets $\{_0r_k\ _0theta_k\ _0fi_k\}$). Besides the coordinates derived from the phyllotactic model, each seed has an initial set of attributes $\{_0A_k\}$ assigned thereto and derived from a seed model, such as attributes defining the shape and form of the respective seed and the optical properties, e.g. translucency, of the same. The initial set of these attributes can be identical for the whole group $_0K$ of the initial seeds or suitably parametrized in dependence on the order $k$ of the given seed. The seed array of this model fills in a certain spatial area $_0V$ or a generally curved planar area $_0S$ in a quasi-homogeneous manner.

The arrangement of the seeds of a simple phyllotactic model according to the equation (1) is characterized in that two nearest neighbouring seeds exist for most of the seeds of said phyllotactic model within the planar surrounding of the latter, the locations of the respective three seeds forming vertices of a scalene triangle. The shape of said triangles undergoes a modification in the direction from the pole of the model towards the margin of the same (wherein the modification rate is higher in the vicinity of the pole and becomes significantly lower towards the margin), said modification taking place cyclically from one special triangle (isosceles triangle A) towards another special triangle (isosceles right-angled triangle B) and then back from the triangle B towards the triangle A. The lengths of the sides of the special triangles will be designated in the following manner: $DELTA_1$ (base side of the triangle A), $DELTA_2$ (legs of the triangle A), $DELTA_3$ (legs of the triangle B), $DELTA_4$ (hypotenuse of the triangle B). When related to the scale of the phyllotactic model c - and with the use of the invariable fm = (FI + 1 / FI) / 2, the above lengths can be expressed by means of the equations (2a) to (2d). The lengths of the sides of all remaining triangles (triangles C) lying between said extreme cases are expressed by the inequalities (2e) to (2g), the shortest length being $DELTA_{tr.C,1}$, the medium length being $DELTA_{tr.C,2}$ and the longest length being $DELTA_{tr.C,3}$. The numerical values of the above distances are as follows: $DELTA_1 = 1.6763c$; $DELTA_2 = 2.0530c$; $DELTA_3 = 1.7725c$; $DELTA_4 = 2.5066c$. Thus, the distances between two planarly adjacent seeds lie in the interval (1.6763c; 2.5066c).

$$DELTA_1 = \text{sqrt} ( \text{pi} / \text{fm} ) . c \qquad (2a)$$

$$DELTA_2 = \text{sqrt} ( ( 3 . \text{pi} ) / ( 2 . \text{fm} ) ) . c \qquad (2b)$$

$$DELTA_3 = \text{sqrt} ( \text{pi} ) . c \qquad (2c)$$

$$DELTA_4 = \text{sqrt} ( 2 . \text{pi} ) . c \qquad (2d)$$

$$DELTA_1 < DELTA_{tr.C,1} < DELTA_3 \qquad (2e)$$

$$DELTA_2 < DELTA_{tr.C,2} < DELTA_3 \qquad (2f)$$

$$DELTA_2 < DELTA_{tr.C,3} < DELTA_4 \qquad (2g)$$

The altitudes of said triangles represent the periodicity of the mesh comprising the seeds in the vicinity of the respective triangle and thereby also the local distance between the neighbouring derived spirals based on a selected oversampling rate of the order of the seeds along the basic spiral. Said periodicity is significant with regard to the construction of the optical device because it constitutes the base for determining the deflection rate of the light beam impinging on a periodical structure (according to a grid equation). When a phyllotactic arrangement of the seeds is concerned, the altitudes of the special triangles ($LAMBDA_1$, $LAMBDA_2$, $LAMBDA_3$, $LAMBDA_4$), as corresponding to the sides ($DELTA_1$, $DELTA_2$, $DELTA_3$, $DELTA_4$) of the same, are given by the equations (3a) to (3d). The numerical values of the above periods are as follows: $LAMBDA_1 = 1.8741c$; $LAMBDA_2 = 1.5303c$; $LAMBDA_3 = 1.7725c$; $LAMBDA_4 = 1.2533c$. The local maximum values of the periodicity of the phyllotactic mesh lie within the interval (1.7725c; 1.8741c).

$$LAMBDA_1 = \text{sqrt} ( \text{pi} . \text{fm} ) . c \qquad (3a)$$

$$LAMBDA_2 = \text{sqrt} ( 2 . \text{pi} . \text{fm} / 3 ) . c \qquad (3b)$$

$$LAMBDA_3 = \text{sqrt} ( \text{pi} ) . c \qquad (3c)$$

$$LAMBDA_4 = \text{sqrt} ( \text{pi} / 2 ) . c \qquad (3d)$$

As far as the construction of the mesh is concerned, it is also important to know which of the seeds lying on the basic spiral has the shortest distances to the neighbouring seeds arranged along the given derived spiral. This order of the respective seed can be expressed by means of the following relation (wherein $F_f$ is the f-th member of a Fibbonacci sequence, said member constituting the basis for oversampling the basic spiral into a derived spiral).

$$k_f = ( \text{fm} / ( 2 . \text{pi} ) ) . F_f^2 \qquad (4)$$

Similarly to the above analysis of the spacing between the seeds and the periodicity of the mesh, it is possible to perform an analysis of the azimuthal rotation of a local portion of that mesh with respect to a selected coordinate system. In this connection, it is useful to base the analysis on the angle included by the individual sides of triangles concerned, on the one hand, and the ray interconnecting the pole of the model with the seed concerned, on the other hand. Said angle gradually increases along the derived spiral; the value of this angle is close to zero in the vicinity of the pole of the respective model; when the distance between the neighbouring seeds corresponds the value DELTA1 along the derived spiral, the value of the angle is 45 ° and -45 °, respectively (according to the rotational direction of the derived spiral) and gradually approaches the limit value, i.e. 90 ° and -90 °, respectively.

The local variability of the arrangement of the seeds within a phyllotactic model becomes more apparent when comparing the latter mesh with a fixed regular mesh formed by equilateral triangles wherein the distances between the respective planarly adjacent elements are constant, the same applying to the periodicity and the local rotational position of such a mesh. For such a mesh having a filling density, which is identical to that of the mesh of the phyllotactic model, the following relations for the space $DELTA_6$ between the elements and for the periodicity $LAMBDA_6$ can be derived, the numerical values of the related parameters being 1.9046c and 1.6495c, respectively.

$$DELTA_6 = \text{sqrt} ( 2 \,.\, \text{pi} / \text{sqrt} ( 3 ) ) \,.\, c \qquad\qquad (5a)$$

$$LAMBDA_6 = \text{sqrt} ( ( \text{pi} / 2 ) \,.\, \text{sqrt} ( 3 ) ) \,.\, c \qquad\qquad (5b)$$

A local variability of the arrangement of the seeds within the phyllotactic model is one of the characteristic features of said model. The knowledge of the parameters of the mesh comprising seeds, particularly the knowledge of a suitably selected set of said periodicities and azimuths depending on the order of the seed concerned in the respective sequence of seeds, is important not only for the construction of the mesh but also for the analysis of the properties of the characteristic pattern when a particular arrangement of the mesh is selected. The above mentioned mutual dependencies can be advantageously utilized when simulating the behaviour of the optical phyllotactic image device, namely not only for configuring the basic illumination and observation but also, for example, for analysing the influence of the dimensions of the light source used on the shape of the characteristic pattern, for analysing possible modifications of the characteristic pattern with respect to the colour and motion parameters thereof. The shape of the basic spiral is in relation to the trajectory of an electron in a magnetic field. Thus, this type of spiral is also called cyclotron spiral. The shape of the individual segments of the framework inside the characteristic pattern can be likened to the trajectory of a ball lying in a scoop having a cross-sectional shape corresponding to that of the derived spiral, said trajectory being obtained during the rotation of said scoop around its attachment point, i.e. around the pole of the respective phyllotactic model.

An important property of the phyllotactic arrangement of the seeds according to the equation (1) consists in that the area defined for each single seed has a constant size. The size of such, let' say, elementary area, $a_0$, can be derived using four different methods. The first method is based on the planar circular surroundings of each seed and works with the scale parameter $c$ - see equation (6a). According to the second method, the size of the elementary area is derived both from the space between the seed concerned and the pole of the model R and from the width of the annulus $DELTA\_R$ assigned to said seed (this annulus can be represented by an orbit where just a single seed can be located) - see the equation 6(b). The third method is derived from the size of the area of a circle sector containing a single seed, the variable $DELTA\_theta$ included in the equation (6c) representing both the angular value of said circle sector and the mean angular distance between each two most adjacent radius vectors of the seeds (i.e. between the rays interconnecting the pole of the model and the respective seed). Assuming a model where the number of the seeds is $k_{max}$, the relation $DELTA\_theta = 2 \,.\, \text{pi} / k_{max}$ will apply. Finally, the fourth method defines the size of the elementary area to be equal to the twofold area of a triangle, the vertices of the latter being formed by the seed concerned and by its nearest planar neighbours. In general, the size of the elementary area can be also derived from other triangles having one of their vertices within the seed concerned and the other two vertices within the nearest seeds arranged along the respective derived spirals. The equation (6d) relates to a specific kind of calculation, namely deriving of the size of an elementary area from the shortest side of the contemplated triangle $d_{min}$ and from the corresponding longest altitude $LAMBDA_{max}$ of the same. By means of the above expression methods and by means of various combinations of the same, it is possible to significantly facilitate the preparation of a seed model as well as the construction and analysis of the objects within a mesh comprising the seeds of the respective phyllotactic model.

$$a_0 = \text{pi} \,.\, c^2 \qquad\qquad (6a)$$

$$a_0 = 2 \cdot \text{pi} \cdot R \cdot DELTA\_R \qquad (6b)$$

$$a_0 = ( R / 2 ) \cdot DELTA\_theta \qquad (6c)$$

$$a_0 = d_{min} \cdot LAMBDA_{max} \qquad (6d)$$

The filling density of the area containing seeds, i.e. the number of seeds per unit area, is directly defined by the phyllotactic model, particularly by the scale parameter $c$ of the phyllotactic model concerned. The filling factor $FF$, i.e. the relation between the sum of the sizes of the seeds within the concerned area and total size of this area depends on the respective seed model and hence with the sizes and shapes of the seeds. While a (simplified) biological model is based on the assumption that the seeds fill in the entire area concerned, i.e. that the relation $FF = 100\%$ applies to such model, a reduced filling factor will be more appropriate for the purpose of the implementation of the optical device. According to an advantageous embodiment, the value of such reduced filling factor will be 50 %. The relations (7a) and (7b) defining the filling factor $FF_c$ for circular seeds (with the radius $ro_c$) and the filling factor $FF_s$ for square seeds (with a constant rotational positions with respect to the coordinate system and with the edge $ro_s$) can be derived from the ratio between the surface area of a seed having the given shape and the equivalent surface area of the same seed as obtained with the use of the above equations. For other shapes of the seeds, such as a general polygon or an ellipse, the procedure can be similar. The maximum sizes of the seeds (under the assumption that the condition of non-overlapping seeds is fulfilled) $ro_{c,max}$ and $ro_{s,max}$ are given by the equations (7b) and (7e), respectively, the highest possible filling factor for these maximum sizes of the seeds being $FF_{c,max}$ and $FF_{s,max}$ - see the equations (7c) and (7f), respectively. The minimum space between the seeds, namely the space $DELTA_1$ as used in the above equations, corresponds to the distance $DELTA_1$ according to the equation (2a). The corresponding substitution results in obtaining the value of 70.21 % for the maximum filling factor related to circular seeds and merely 44.72 % for the maximum filling factor related to square seeds. This means that circular seeds make it possible to achieve an acceptable extent of flexibility with respect to a variable filling factor. In this regard, square-shaped seeds having a constant rotational position with respect to the coordinate system are less advantageous. Nevertheless, a seed model, which takes account of the location of the square-shaped seed as well as the rotational positions of the individual seeds derived from such a rotation, makes it possible to increase the threshold value of the filling factor to an acceptable level.

$$FF_c = ro_c^2 / c^2 \qquad (7a)$$

$$ro_{c,max} = DELTA_1 / 2 \qquad (7b)$$

$$FF_{c,max} = ( DELTA_1 / ( 2 \cdot c ) )^2 \qquad (7c)$$

$$FF_s = ro_s^2 / ( \text{pi} \cdot c^2 ) \qquad (7d)$$

$$ro_{s,max} = DELTA_1 / \text{sqrt} ( 2 ) \qquad (7e)$$

$$FF_{s,max} = ( DELTA_1 / c )^2 / ( 2 \cdot \text{pi} ) \qquad (7f)$$

Example of a three-dimensional phyllotactic model, wherein the seeds are arranged around the surface of the lateral area of a rotational cone - see the equations (8a) to (8e), and a seed model wherein each seed is defined by three attributes: the shape of the seed is a cylindrical cavity, the radius of the cylinder being $ro_k$ and the depth of the cylinder being $h_k$ and the default values of the attributes $ro_k$ and $h_k$ being assigned by means of the equations (8f) and (8g); the constant radius of the cylinder is based on the scale parameter c of the phyllotactic model and from the corresponding planar filling factor $FF$ (e.g., for $FF = 0.5$, one half of the surface area of the planar optical structure arranged in the surroundings of the seed concerned will contain the cavities related to said seed and to the neighbouring seeds thereof, while the other half of that area will be formed by the even surface of the planar optical structure); the

depth $h_0$ of the cylinder is constant.

$$r_k = c \cdot k^{1/q} \qquad\qquad (8a)$$

$$theta_k = k \cdot theta_0 \qquad\qquad (8b)$$

$$z_k = -r_k \qquad\qquad (8c)$$

$$x_k = r_k \cdot \cos theta_k \qquad\qquad (8d)$$

$$y_k = r_k \cdot \sin theta_k \qquad\qquad (8e)$$

$$ro_k = c \cdot FF^{1/2} \qquad\qquad (8f)$$

$$h_k = h_0 \qquad\qquad (8g)$$

In order to obtain a homogeneous filling factor, i.e. a constant density of the seeds in the entire area, the member $q = 2$ should be selected in the equation (8a). This will correspond to the equation (1a) and, simultaneously, to the case when the scale parameter c has a constant value in the entire area. When a different value of the parameter $q$ is selected, a different variable level of filling density in the direction from the pole towards the margin of the model can be obtained; when $q < 2$, the basic spiral unfolds faster and the area filled with seeds becomes sparser in the direction from its midpoint towards its margin; contrarily, when $q > 2$, the basic spiral unfolds more slowly and the area filled with seeds becomes denser in the direction from its midpoint towards its margin. In such cases, the effective value of the parameter c is variable which must be taken into consideration when calculating and constructing the initial meshes comprising seeds. Even though the above method of changing the filling density is quite simple, it does not provide any sufficient extent of flexibility when a specific pattern of the filling density in the direction from the pole of the model to the margin of the same is required. In such cases, it is more useful to consider a weighted sum of at least two members having different exponents in the above equation. Nevertheless, the effective value of the scale parameter $c$ will remain variable and hence it is necessary to resolve the local variations of said value in the area considered before proceeding with the subsequent calculations.

The above mentioned initial arrangement of the seeds can be transformed by meant of a defined mathematical prescription. The aim of this primary transformation may be (1) to modify the initial sets of the attribute values $\{_0A_k\}$ of the seeds in a defined manner without affecting the coordinates of the same (e.g. $\{_0x_k \,_0y_k \,_0z_k\}$) and, hence, without affecting the filled area ($_0V$ or $_0S$); and/or (2) to change the coordinates (e.g. $\{_0x_k \,_0y_k \,_0z_k\}$) of the seeds in order to locally modify the (quasi) homogeneity of the initial arrangement without excluding a possible modification of the initial attribute values $\{_0A_k\}$ but without affecting the filled area ($_0V$ or. $_0S$); and/or (3) to change the coordinates (e.g. $\{_0x_k \,_0y_k \,_0z_k\}$) of the seed in a manner causing a desired modification of the initial filled spatial area $_0V$ or a modification of the initial curved area $_0S$ to occur along with a necessary corresponding modification of the (quasi) homogeneity of the initial arrangement and with a possible modification of the initial sets of the attribute values $\{_0A_k\}$.

The initial spatial arrangement of the seeds or a transformed spatial arrangement of the seeds is projected into a generally selected primary plane of the graphic template where a group of graphical elements $_1K$ corresponding to the group of the initial seeds $_0K$ will fill up the primary planar area $_1P$. It is useful, but not necessary, to select a primary plane that is situated in a close vicinity to the initial plane $_0x$-$_0y$ and $_0r$-$_0theta$, respectively; however, the selected primary plane should not be identical to the latter one. In this primary area $_1P$, each graphical element has a unique permanent basic order $k$, a derived pair of coordinates $\{_1x_k \,_1y_k\}$ and a set of attributes $\{_1A_k\}$, the values of the latter being generally unequal. From a local point of view, a certain subgroup of planarly adjacent elements can be considered to be a local graphical mesh. The above mentioned process of transforming the initial seeds and projecting the same into primary graphical elements can be described as follows.

$$_1K \equiv \,_0K \qquad\qquad (9a)$$

$$\{ _0x_k\ _0y_k\ _0z_k\ _0A_k\} \rightarrow \{ _1x_k\ _1y_k\ _1A_k\} \quad \forall\ k \in\ _0K \tag{9b}$$

$$_0V \text{ and } _0S \rightarrow\ _1P, \text{ respectively} \tag{9c}$$

The latter graphical planar arrangement of graphical elements is further implemented on the basis of a primary planar optical structure comprising a plurality of individual optical primitives, each single optical primitive being implemented in a location defined by the coordinates of the corresponding graphical element and in a manner based on the attributes of said graphical element.

When illuminated and observed in a usual manner, the above mentioned planar optical structure forms a primary optical image on the observer's retina, said image corresponding to a modified characteristic pattern obtained by means of the of the selected phyllotactic model and the selected seed model. A characteristic feature of such primary image is posed by planar segments having a gradually changing level of colourfulness or intensity. One of the interesting properties of an optical structure derived from a simple model according to the equation (1) consists in the rotational invariance of the primary image; this means that the perception of the characteristic pattern remains unchanged when the respective optical structure is being rotated around a perpendicular intersecting the midpoint of the structure (i.e. the pole of the phyllotactic model) under given conditions of illumination and observation. In an advantageous embodiment, the rotational invariance of the image generated by the device prepared according to the invention is based on a suitable selection of the way how the respective initial phyllotactic model is transformed and projected. Another property of the characteristic pattern consists in the rotational symmetry of the image under a 180 degrees rotation. Another significant property of the characteristic pattern consists in the partial self-similarity thereof; this means that the individual segments of the characteristic pattern have a similar shape and that size of said segments becomes smaller towards the midpoint of the pattern, the size of each subsequent segment being 2.6180 smaller than that of the preceding segment. Furthermore, the above mentioned rotational symmetry means that the segments lying, for example, in the quadrants I and III have the same size after having been mutually rotated by 180 degrees. Then, the segments lying in the quadrants II and IV are similar to each other and their sizes are 1.6180 times greater or smaller when compared to the segments lying in the in the quadrants I and III, respectively. When the illumination of the optical structure is relatively sharp, each observer's eye receives light beams originating in a slightly different portion of the optical structure; this enables a stereoscopic image and a spatial impression of the perceived characteristic pattern to be obtained. When the optical structure is laterally tilted, the observer perceives a change to the rotational position of the characteristic pattern. When the optical structure is slightly and gradually tilted towards / away from the observer, the latter will perceive a characteristic pattern that is subject to morphing, i.e. a characteristic pattern comprising segments undergoing a gradual change in size and colourfulness. When the optical structure is tilted in an abrupt and distinct manner, a changeover between two different characteristic patterns is perceived. When the optical structure is illuminated by a monochromatic spot light source, the segments of the characteristic pattern are formed by thin short curves. When the optical structure is illuminated by a white spot light source, the aforesaid curves become longer, the marginal portions of each curve containing a colour corresponding to a shorter wavelength and the middle portion containing colours corresponding to longer wavelengths. When being illuminated by a wide white light source, the segments of the characteristic pattern are extending perpendicularly to the respective curve.

A modification of the primary entities results in the formation of corresponding secondary entities. At least three different types of secondary subareas can be created inside the primary area $_1K$: the first secondary subarea $_{2A}K$, the second secondary subarea $_{2B}K$ and the third secondary subarea $_{2C}K$. Removing the secondary subareas from the primary area causes the primary subarea $_{1N}K$ to emerge.

$$_{2A}K \subseteq\ _1K \tag{10a}$$

$$_{2B}K \subseteq\ _1K \tag{10b}$$

$$_{2C}K \subseteq\ _1K \tag{10c}$$

$$_{1N}K =\ _1K \setminus (\ _{2A}K \cup\ _{2B}K \cup\ _{2C}K ) \tag{10d}$$

The first type of a secondary subarea (hereinafter referred to as the first secondary subarea) within the primary area is characterized by a changed density of the primary mesh comprising planarly adjacent graphical elements in this selected subarea. In this connection, the density can be changed in a rational (mathematical) manner. Thus, the modified first secondary mesh can be either denser or sparser than the primary one. A denser first secondary mesh means that such a mesh is formed by adding new graphical elements to the respective primary mesh; in this case, the original graphical elements of the primary mesh will be either entirely or partly retained. Contrarily, a sparser first secondary mesh means that only a certain number of the original graphical elements will be retained and, as the case may be, some new first secondary graphical elements will be added thereto. Within the framework of the first secondary transformation of the initial first secondary subarea $_{2A}K$, the elements $k'$ will be retained and the elements $k''$ will be removed; furthermore, the elements k''' will be added. Thus, the resulting first secondary subarea will contain the elements $k'$ and $k'''$. The newly formed elements $k'''$ will be linked to the retained initial ones $k'$ and will have their coordinates $\{_{2A}x_{k'''}\,_{2A}y_{k'''}\}$ and their attributes $\{_{2A}A_{k'''}\}$ derived from those of the retained initial elements $\{_{2A}x_{k'}\,_{2A}y_{k'}\,_{2A}A_{k'}\}$.

$$_{2A}K \rightarrow\ _{2A'}K \qquad\qquad (11a)$$

$$k',\, k'' \in\ _{2A}K \qquad\qquad (11b)$$

$$k',\, k''' \in\ _{2A'}K \qquad\qquad (11c)$$

$$\{_{2A}x_{k'}\,_{2A}y_{k'}\,_{2A}A_{k'}\} \equiv \{_{1}x_k\,_{1}y_k\,_{1}A_k\}\ \forall\ k' \qquad\qquad (11d)$$

$$\{_{2A}x_{k'''}\,_{2A}y_{k'''}\,_{2A}A_{k'''}\} = \mathrm{fce}\ (\ \{_{2A}x_{k'}\,_{2A}y_{k'}\,_{2A}A_{k'}\}\ )\ \forall\ k''' \qquad\qquad (11e)$$

The mode of implementation of the first secondary optical structure is similar to that of the primary optical structure.

The character of the first secondary image is largely dependent on the size of at least one first secondary subarea and, simultaneously, on the rate of change in the density of the first secondary mesh. In an advantageous embodiment, a local change in colourfulness or reduction of the brightness of the primary image occurs in the first secondary subarea and the first secondary image is observable at the same azimuthal angle but with a different angular deviation from the direction of the reflection of the impinging light when compared to the primary image.

The second type of the secondary subarea (hereinafter second secondary subarea) within the primary subarea is characterized in that the coordinates of the respective graphical elements are modified. The number of graphical elements remains unchanged and the same applies to all the attribute values of these graphical elements. The location-based modification of each graphical element consists in relocating the respective element into a node of the second secondary web, the latter web being generally irregular and non-orthogonal and locally several times finer (denser) when compared to the original mesh of graphical elements in the vicinity of the respective primary graphical element. This causes a local disruption of the homogeneity of the primary mesh to occur, such disruption resulting in the formation of subharmonic components in the image of the spatial frequencies of the original primary mesh. The inherent properties of the web (irregularity and non-orthogonality) enable the kind and the extent of said local disruption of the homogeneity of the primary mesh to be defined.

$$\{_{1}x_k\,_{1}y_k\} \rightarrow \{_{2B}x_k\,_{2B}y_k\}\ \forall\ k \in\ _{2B}K \qquad\qquad (12a)$$

$$\{_{2B}A_k\} \equiv \{_{1}A_k\}\ \forall\ k \in\ _{2B}K \qquad\qquad (12b)$$

The mode of implementation of the second secondary optical structure is similar to that of the primary optical structure.

Although the character of the second secondary image depends on the local values of the parameters of the secondary web as related to the local values of the parameters of the respective primary mesh, the second secondary subarea is typically filled with a visible mosaic consisting of small scintillant and, in a considerable extent, achromatic points which are preferably observable when the angular deviation from the direction of the reflection of the impinging light is smaller than the corresponding distance obtained in the primary image. Simultaneously, a decrease in the intensity of the primary image occurs in the second secondary subarea.

The third type of the secondary subarea (hereinafter third secondary subarea) within the primary subarea is characterized in that the attribute values of the respective primary graphical elements are modified. According to an advantageous embodiment, the attribute values of the third secondary elements can be independently changed for each single primary element. In another advantageous embodiment, the attribute values of the individual graphical elements can be changed in relation to the attribute values of a defined conglomeration of the adjacent graphical elements, i.e. to the subset of those graphic elements which are arranged in the vicinity of the graphical element concerned. In addition to the previously mentioned attributes (relating to the shape and dimension of the given graphical element), the set of attributes can also include further attributes, namely both geometrical and physical ones, such as orientation, translucency or lustrelessness.

$$\{ _1A_k \} \rightarrow \{ _{2C}A_k \} \ \forall \ k \in \ _{2C}K \qquad (13a)$$

$$\{ _{2C}x_k \ _{2C}y_k \} \equiv \{ _1x_k \ _1y_k \} \ \forall \ k \in \ _{2C}K \qquad (13b)$$

The mode of implementation of the third secondary optical structure is similar to that of the primary optical structure.

According to an advantageous embodiment, the brightness of the primary image is locally decreased in the third local subarea, a third secondary image being typically observable at viewing angles which are very distant from the direction of the reflection of the impinging light. In another suitable arrangement, the implementation of the third secondary subarea may cause the translucency of said subarea to be different from that of the remaining subareas; for example, the entire primary area may be reflective and the third secondary subarea may be translucent.

Furthermore, a method of preparing an optical phyllotactic image device is presented. This method is characterized in that a phyllotactic mesh comprising graphical elements and derived from a single discrete variable $k$ is used for preparing the optical image device.

This mesh comprising graphical elements is constructed on the basis of a phyllotactic model defining the locations of the seeds and a seed model defining the attributes of the seeds, then the array consisting of said seeds optionally undergoes a primary transformation followed by projecting the seeds into a selected plane, whereby a planar primary area of a graphic template is obtained, said primary area being filled with an ordered series of graphical elements. Each of said elements has one basic order assigned thereto and defined by the respective phyllotactic model, two derived coordinates lying in the plane of the graphic template and a set of modifiable attributes, the initial values of the latter being also defined by the respective phyllotactic model. The method is further characterized in that at least one secondary subarea is defined within said primary area with the use of a graphic pattern, said secondary subarea being one of the types described below. The first of them (namely the first secondary subarea) is specific in that the density of the mesh comprising graphical elements undergoes a change within this subarea. The second secondary subarea is characterized by projecting the coordinates of the graphical elements into a generally non-orthogonal and irregular web. In the third secondary subarea, the above mentioned attributes of the graphical elements are modified in a suitably selected manner.

The above graphical patterns can have diverse characters, the number of alternatives and variants being noticeably higher when compared to a graphical pattern according to the usual concept. For example, such alternatives may include grid or vector graphics, mathematical or textual descriptions, freehand drawings etc. As far as the colour depth is concerned, a monochromatic pattern, a grayscale pattern or a reduced / full colour pattern can be used. Other possible variants include line graphics, planar graphics or relief graphics, an additional attribute being represented by the requirement for the imitation of various materials having characteristic optical properties or a specific surface finish. With regard to the variability of the image obtained by means of the optical image device, the partial graphic patterns representing images of animated sequences or, as the case may be, different images obtained under diversely defined illumination a/or observational conditions can be organized into coherent sets comprising said partial graphic patterns. The graphic patterns can be employed not only for preparing the secondary areas and the properties of the graphical elements contained therein but also for performing a primary transformation of an array of seeds and for creating other types of areas, especially tertiary, quaternary and quinary ones. According to a further advantageous embodiment, it is possible to create graphic patterns for an optically variable image device in a manner that enables the device at least partly conforms to the patterns needed for subsequent large-scale operation, such as a controlled demetallization, punching or application of a foil prepared from an initial template of an optical structure.

The latter method is further characterized in that said mesh is transformed into micro-optical and/or nano optical primitives (or into groups of such primitives) forming a planar optical structure. Such transformation should be performed in a way that will enable said optical primitives to invoke (under usual condition of illumination and observation) a perception of at least two different image types: a primary image corresponding to the characteristic pattern based on the combination of the phyllotactic and seed models as well as to at least one further pattern corresponding to the respective graphic pattern. When implementing the optical primitives, it is useful to change the initial sequence of the graphic elements corresponding to that of the seeds within the respective phyllotactic model in a manner that will enable to gradually implement the optical primitives in mutually adjacent planes. While it may be useful to utilize the initial spiral in the close vicinity of the pole of the model, it will be more efficient to use a different sequence in the prevailing portion of the optical structure; according to an advantageous embodiment, implementation sequences extending along spirals, which have been derived from the basic spiral with the use of different oversampling rates selected in accordance with the location of the portion concerned, can be utilized. In the course of the graphic processing procedure as well as during the implementation itself, it is useful to provide a multilevel hierarchy of data structures, suitable approaches related to data compression / decompression and, when possible, parallel processing methods since otherwise the entire non-structured description of the optical structure could reach a prohibitive size and the duration of processing and implementation could become unacceptably long.

The method is further characterized in that the conversion of a graphical mesh into an optical structure is carried out using a relief or micro-relief technique, for example one of the following lithographic techniques and technologies or combinations thereof: a mechanical, physically chemical, chemical, ion, electron, optical, thermal, UV technique etc.

According to an advantageous embodiment, the present method is further extended by adding a method of providing tertiary subareas containing striking features / objects of various types, such as a microtext, micro graphics, nano graphics, coded structure, computer generated hologram based on the Fresnel or Fourier principle or the like. According to a particularly advantageous embodiment, the shape of the template used for such objects is modified into a mesh comprising derived spirals of the phyllotactic model.

According to another advantageous embodiment, the present method of preparing an optically variable image device is extended by adding a quaternary subarea formed by at least two different primary areas which at least partly overlap each other. According to a particularly advantageous embodiment, said mutually overlapping primary areas have a coincident pole, namely the location of the midpoint of the phyllotactic model. In a further advantageous embodiment, the mutually overlapping areas have a significantly different filling density given by the respective phyllotactic model and/or a significantly different filling factor given by the respective seed model.

In another advantageous embodiment, the optical planar structure is extended by adding an area or areas constructed using a method that is not based on the use of phyllotactic and seed models. This is particularly advantageous in either case: firstly, when it is desirable to emphasize the characteristic properties of the structure according to the phyllotactic arrangement in contrast to other types of structures and, secondly, when it is desirable to integrate an additional structure into the optical device, which integration would be unreasonably difficult or even impossible if a structure according the phyllotactic arrangement were concerned. In a further advantageous embodiment, the present method is extended by forming a quinary subarea which is characterized in that the microstructure of at least one portion of at least one primary area of at least partially mutually overlaps with a microstructure of a different type within it.

### Brief Description of the Drawings

Figure 1 shows prior art, namely the locations of the seeds within a simple two-dimensional phyllotactic model as well as a basic spiral for a model comprising 30 seeds (a) along with a basic spiral and derived spirals for a model comprising 400 seeds (b).

Figure 2 shows prior art, namely a simple two-dimensional left-handed phyllotactic model comprising 10,000 seeds (a) and a pattern that is recognizable when observing said model at a very wide viewing angle (b).

Figure 3 shows prior art, namely the mutual positional relationship of a light source, an optically variable image device and an observer; basic directions of propagation of the reflected and passing light within the device (a) and detailed directions of the propagation of the reflected light within the device (b).

Figure 4 shows a three-dimensional phyllotactic model (a), a primary transformation (b) of the same and a projection of such a model into a selected plane (c).

Figure 5 shows the execution of a local change in the density of the mesh by oversampling the latter at the ratio of 3:2 along the first selected series of spirals and at the ratio of 2:3 along the second selected series of spirals, the respective references used being as follows: initial state (a), auxiliary mesh (b), oversampled auxiliary mesh (c), final state (d).

Figure 6 shows a local projection of the locations of the graphical elements into a second secondary web (a) and a detailed view of the respective embodiment (b).

Figure 7 shows a local modification of the attributes of the graphical elements (a) and a detailed view of the respective embodiment (b).

Figure 8 shows a mesh based on a microelement (a) along with a mesh based on a coded image, namely on a computer generated hologram (b).

Figure 9 shows, in a schematical view, the transformation of the initial arrangement into a planar optical structure; phyllotactic and seed models (a), the initial state of a graphic template (b), the final state of the same graphic template (c), a planar optical structure (d), an image of a characteristic pattern (e) and an image corresponding to a graphic pattern (f).

Figure 10 shows an optical device providing the protection of documents.

Figure 11 shows an optical device used for decorative purposes.

Figure 12 shows, in the respective views, a simple two-dimensional phyllotactic model; a simple left-handed model (a), a combination of left-handed and right-handed models and two mutually overlapping primary areas representing a quaternary area (b).

Figure 13 shows a set of small fine phyllotactic models nested into one large coarse model, each seed of the coarse phyllotactic model being filled with groups of elements ordered in accordance with the respective fine model.

## Exemplary Embodiments of the Invention

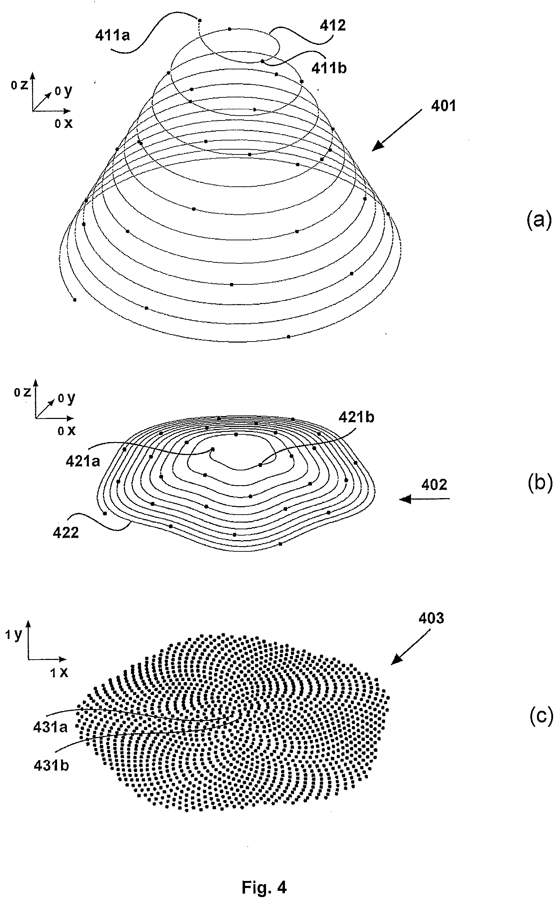

The method of converting an initial phyllotactic model into a primary mesh comprising graphical elements according to the present invention can be described with reference to Figure 4. This method consists of two steps. An axonometric view of an initial three-dimensional phyllotactic model **401** according to the system of equations (8) is shown in Figure 4 (a). According to an advantageous embodiment, an initial basic spiral **412** - similar to the basic spiral **160** shown in Figure 1 - twine around the surface of the lateral area of a cone. Along said spiral, the locations of the first thirty seeds are indicated, the first two seeds being marked as **411a** and **411b.** According to another advantageous embodiment, the spiral can lie on the surface of another geometric body, such as on the lateral area of a cylinder or pyramid, on the surface of a sphere or ellipsoid or the like. According to another advantageous embodiment, the spiral can pass through a spatial area delimited by a selected geometric body.

The first step of the conversion of an initial phyllotactic model into a primary mesh comprising graphical elements according to the present invention comprises the transformation of the order of the seeds by means of a defined mathematical prescription.

The aim of this transformation may be:

(1) to modify the initial sets of the attribute values $\{_0A_k\}$ of the seeds in a defined manner without affecting the coordinates of the same (e.g. $\{_0x_k \,_0y_k \,_0z_k\}$) and, hence, without affecting the filled area ($_0V$ or $_0S$); and/or

(2) to change the coordinates (e.g. $\{_0x_k \,_0y_k \,_0z_k\}$) of the seeds in order to locally modify the (quasi) homogeneity of the initial arrangement without excluding a possible modification of the initial attribute values $\{_0A_k\}$ but without affecting the filled area ($_0V$ or. $_0S$); and/or

(3) to change the coordinates (e.g. $\{_0x_k \,_0y_k \,_0z_k\}$) of the seed in a manner causing a desired modification of the initial filled spatial area $_0V$ or a modification of the initial curved area $_0S$ to occur along with a necessary corresponding modification of the (quasi) homogeneity of the initial arrangement and with a possible modification of the initial sets of the attribute values $\{_0A_k\}$.

According to the advantageous embodiment illustrated in Figure 4 (b), wherein the transformed model **402** is shown in an axonometric view, the displacement of the initial coordinates of the seeds **411a, 411b** distributed along the initial basic spiral **412** into the positions of the seeds **421a, 421b** distributed along the transformed basic spiral **422** is carried out in a manner which enables the desired modification of the initial area of the curved plane $_0S$ into the modified plane $_{0'}S$ to take place and, simultaneously, the corresponding transformation of the initial basic spiral **412** into the transformed basic spiral **422** to be performed. At the same time, the (quasi) homogeneity of the initial arrangement is also changed without affecting the initial set of the attribute values $\{_0A_k\}$. According to another advantageous embodiment, a change to the coordinates (e.g. $\{_0x_k \,_0y_k \,_0z_k\}$) the (quasi) homogeneity of the initial arrangement without affecting the initial filled area ($_0V$ and $_0S$, respectively). According to a further advantageous embodiment, a modification of the initial sets of the attribute values $\{_0A_k\}$of the seeds is performed, said attributes being, e.g., the sizes or rotational positions of the respective seeds. If the attribute corresponding to the size of a seed assumes zero value for the selected subgroup of seeds, the area formed by that subgroup becoming a virtually masked. Thereby, the intended reduction of the modified area is achievable.

The second step of the conversion of an initial phyllotactic model into a primary mesh comprising graphical elements according to the present invention comprises the projection of the modified area $_{0'}S$ into a generally selected plane of the graphic template, as shown in Figure 4 (c). The seeds of the initial model are converted into graphical elements. For the sake of clarity, the transformed basic spiral **422** has been omitted in the latter picture. While both the number of the initial seeds **411a, 411b** shown in Figure 4 (a) and the number of transformed seeds **421a, 421b** shown in Figure 4 (b) is 30, in Figure 4(c) the number of the graphical elements **431a, 431b** corresponding to the transformed seeds **421a, 421b** is increased from 30 to 3,000. When being projected into a selected plane, the model delimits a planar area $_1$P which has a size corresponding to that of the primary area of the graphic template **403.**

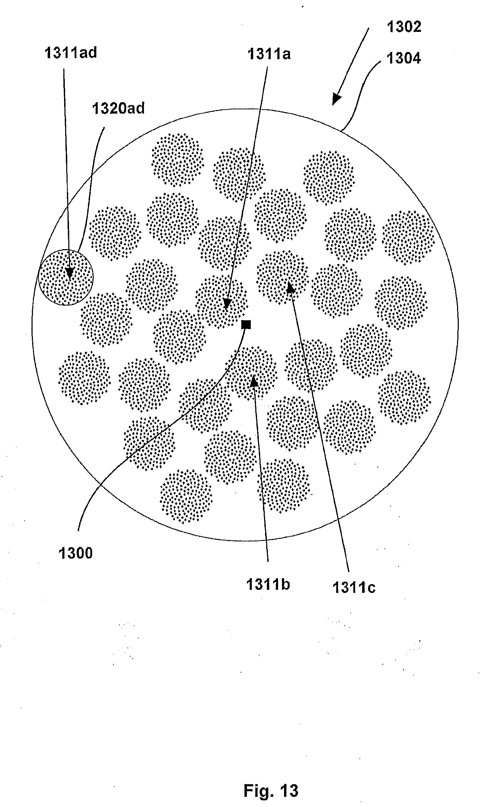

The entire phyllotactic image device can be created using a single phyllotactic or several phyllotactic models. When the arrangement consists of more than one model, the areas corresponding to the individual models can be suitably combined, an example of such a combination being an arrangement enabling said areas to occupy adjacent positions within a selected plane into which the individual models are projected. Another possible arrangement enables said areas to partially or entirely overlap each other. Another advantageous arrangement makes it possible to combine various phyllotactic models at different hierarchical levels, as illustrated by the example shown in Figure 13.

This example shows two types of models having a distinctly different level of coarseness, said model being mutually embedded or nested. The illustrated arrangement refers to the coarse left-handed phyllotactic model **1302** having the pole **1300,** consisting of 30 seeds **1311a, 1311b, 1311c** to **1311ad** and having the scale parameter $c_{raw}$ = 130 expressed by the equations (1a) and (8a), respectively. The latter seeds fill in the area delimited by the area boundary **1304** of a coarse model, each individual seed filling in a corresponding subarea (e.g. the thirtieth seed **1311ad** fills in a subarea delimited by the boundary **1320ad** of the (thirtieth) seed). Moreover, this figure shows 30 finer phyllotactic models of a similar type, the positions of the individual seeds of the respective coarse model defining the poles (or midpoints) of the individual finer models; each finer model of this type contains 160 seeds having the scale parameter $c_{fine}$ = 8.

The aforementioned arrangement can be comprehended in two different ways. According to one standpoint, the coarse model can be considered to be the basic phyllotactic model of the device concerned, each of the thirty groups of optical primitives, which belong to such model being formed by 160 primitives arranged within a fine phyllotactic model. According to the other standpoint, the fine model can be considered to be the basic phyllotactic model of the device concerned, said model being combined with another 29 models of the same type, the resulting 30 models forming one coarser phyllotactic model. Similarly, an arrangement with more than two hierarchic nesting levels can be considered.

From a more general point of view, it is not necessary to use the phyllotactic model at all hierarchical levels; some levels or, as the case may be, portions thereof can be formed by simplified mathematical models, such as by those based on an orthogonal grid, a mathematically defined curve / plane or a freehand graphical sketch.

In connection with the hierarchical arrangement of the entire optical phyllotactic image device it may be advantageous to use the hierarchical positioning mode for the implementation system wherein some hierarchies of the phyllotactic device being constructed may be partly or entirely related to the overall hierarchy of the implementation (exposure) system.

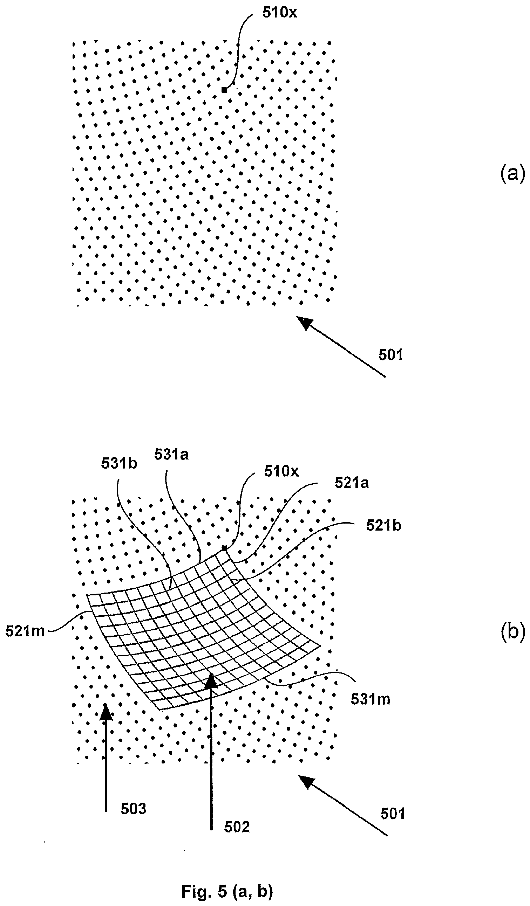

The first secondary subarea is characterized in that the construction of the first secondary mesh in the selected subarea is followed by the change in the density of the primary mesh comprising planarly adjacent graphical elements. Figure 5 (a) shows the primary area **501** of the graphic template (or a cut-out therefrom, to be more exact) where one graphical element **510x** (or a selected reference graphical element, to be more exact) is marked, the location of this element being the initial one for the construction of the first secondary subarea. Figure 5 (b) shows the same cut-out from the primary area **501,** said area encompassing the secondary subarea **502** comprising 13 × 13 = 169 planarly neighbouring graphical elements, one of said graphical elements being referenced as **510x**. The primary subarea **503** is formed by the remaining portion of the primary area **501** that does not fall into the secondary subarea **502;** for the sake of clarity, only a cut-out from the former subarea is shown.

In addition, two sets of thirteen auxiliary lines are arranged in the secondary subarea **502,** namely one suitable set of derived spirals **521a, 521b** to **521m** and another suitable set of derived spirals **531a, 531b** to **531m,** the individual auxiliary lines intersecting the positions of the graphical elements within the selected secondary subarea and representing partial projection of suitably selected derived spirals belonging to the initial phyllotactic model, said suitably selected derived spirals being obtained from the basic spiral of the three-dimensional phyllotactic model, e.g., by oversampling the latter with the use of two consecutive members of a Fibbonacci sequence. The auxiliary lines only present an imaginary clarifying concept and they do not present real elements used for implementing the device.

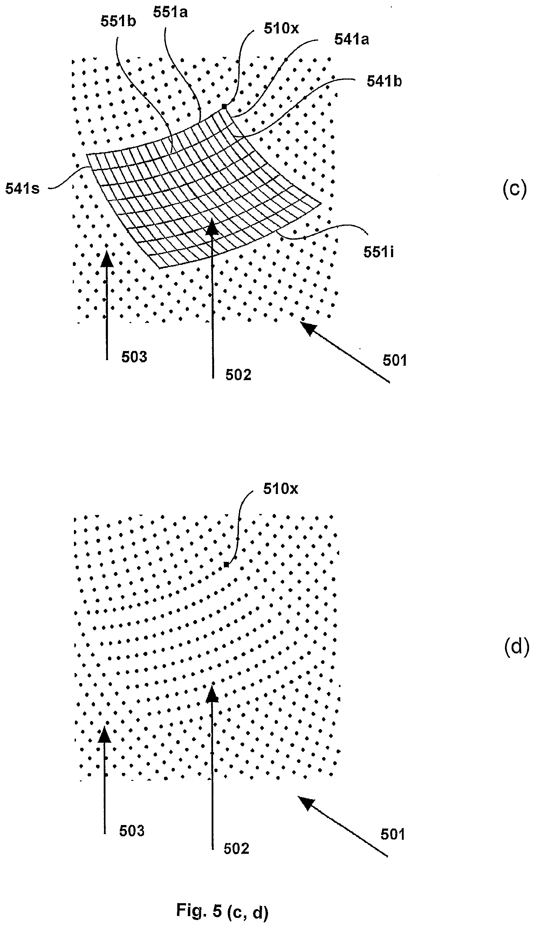

Afterwards, an intended interpolation or oversampling of the auxiliary mesh is performed in the next step, as shown in Figure 5 (c). The oversampling process takes place in at least one direction, namely along auxiliary lines and by means of at least one coefficient, the latter being a rational number, i.e. a number that can be expressed as the fraction having both an integer numerator and an integer denominator. In this particular example, the density of the mesh is increased in the ratio of 3 : 2 in one direction, which means that one suitably selected set of 13 spirals **(521a, 521b to 521m)** lying in the primary area is converted into a suitable set of 19 derived spirals **(541a, 541b to 541s)** lying in the secondary subarea. Simultaneously, the density of the mesh is decreased in the ratio of 2 : 3 in another direction, which means that another suitably selected set of 13 spirals **(531a, 531b to 531m)** lying in the primary area is converted into another suitable set of 9 derived spirals **(551a, 551b to 551i)** lying in the secondary subarea. The intersections of the derived spirals lying in the secondary subarea define the new positions of the graphical elements in the respective selected subarea, some graphical elements - including one graphical element **510x** - remaining in the respective original positions, some other graphical elements being removed and some new graphical elements being added, the newly added graphical elements remaining linked to at least one graphical element retained in the initial arrangement. Thereby, the initial linear sequence is maintained, either in a reduced form or in a branched form.

The final form of the highlighted secondary subarea **502** is shown in Figure 5 (d). Now, this subarea comprises 9 × 19 = 171 graphical elements in total, compared to the original number of 169. According to the latter example, the first secondary subarea is identical to the corresponding subarea of the mesh constructed. According to a different arrangement, the first secondary subarea can form a subset within the corresponding subarea of the mesh constructed.

The above simplified clarifying example is based on an oversampled mesh where the change in the density of the mesh has been achieved independently in both auxiliary directions. In another advantageous embodiment, the change in density can be achieved in a more general manner consisting in that the auxiliary derived lines do not need to be quasi parallel to the derived spirals of the primary area.

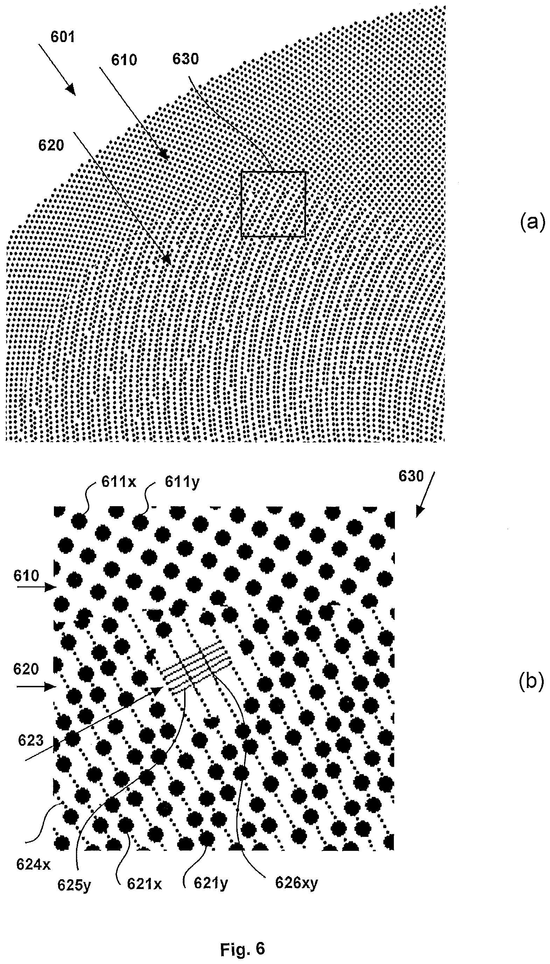

The construction of a second secondary subarea can be explained with reference to the schematic sketch shown in Figure 6 (a). This figure shows a cut-out of the primary area **601** of the graphic template, said cut-out including a portion of the primary subarea **610** and a portion of the second secondary subarea **620**. A detail of the interface **630** between these two subareas is drawn in Figure 6 (b). In the primary subarea **610,** the positions of the graphical elements - e.g. **611x** and **611y** - are implemented in exact accordance with the phyllotactic model; in other words, the positional accuracy of said elements depends on the overall accuracy of the implementation system. This positional accuracy, i.e. the fineness of the primary web, should be by at least more then two orders higher when compared to the average spacing between planarly neighbouring seeds, which spacing approximately correspond to the constant c (scale parameter) in the equations (1a) and (8a), respectively. On the other hand, the positions of the graphical elements lying in the second secondary subarea - such as the elements **621x** and **621y** - are rounded in a manner enabling those positions to fall into the second secondary web **623,** said web being intentionally coarser, i.e. by just approximately one order finer, when compared to the average spacing between planarly neighbouring seeds. In this exemplary embodiment, the second secondary web **623** is formed by the grid of a polar coordinate system having its origin coincident with the pole of the phyllotactic model. A portion of this second secondary web **623** is indicated in an area of the Figure 6 (b) where several graphical elements have been omitted for the sake of clarity. One of the lines of the second secondary web having a constant radius, namely one line of the web extending along the second coordinate of the second secondary web, is referenced as **625y;** one of the lines of the second secondary web having a constant azimuth, namely one line of the web extending along the first coordinate of the second secondary web, is referenced as **624x;** the nodes (such as **626xy),** i.e. the intersections of said lines, form a group of permitted coordinates of the positions of the graphical elements within the second secondary subarea, the given graphical element lying in said second secondary subarea being displaced from the initial position to the position of the respective nearest node **626xy.** Using the above described method causes a distinct disruption of the regularity of the arrangement of graphical elements in the second secondary area.

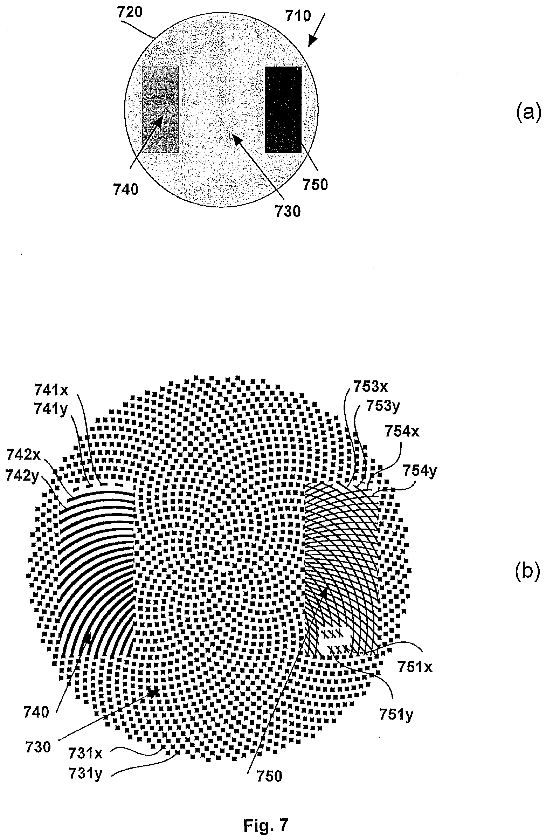

Figure 7 shows the method of formation of a third secondary subarea. The primary area **710** shown in Figure 7 (a) has the boundary **720** of the primary area and is filled with graphical elements arranged in accordance with the respective phyllotactic model; moreover, two rectangular subareas, one third secondary subarea **740** and another third secondary subarea **750** are marked out within said primary area, in which subareas two different variant of the third secondary subarea will be implemented, the remaining portion of the primary area **710** (such as a circular one) representing the primary subarea **730**. A detailed view of the primary area having a circular shape is shown in Figure 7 (b). The graphical elements, such as **731x** and **731y,** arranged in the primary subarea **730** have a square shape, the size and rotational position of the respective squares being constant. The third secondary subarea is characterized in that the attribute values of the graphical elements undergo a change therein, the numbers and position of such elements remaining unchanged.

In one third secondary subarea **740,** the following changes to the parameters of the graphical elements will be performed: the shape of the graphical elements - e.g. **741x** a **741y** - will be changed from a square to a quasi-rectangle, the orientation and size of the latter varying in dependence on the position of the planarly neighbouring graphical elements; according to an advantageous embodiment, the longer side of said rectangle is virtually equal to the spacing between the position of the given element and the position of the neighbouring one along the derived spiral, the type of the spirals being the same for the entire secondary subarea **740;** in this manner, the individual segments of the spirals are obtained - such as the line **(742x)** formed by one series of graphical elements of one third secondary subarea and the line **(742y)** formed by another series of graphical elements of that third secondary subarea - as shown in Figure 7 (b).

Similarly, in another third secondary subarea **750,** the following changes to the parameters of the graphical elements will be performed: the shape of the graphical elements of another third secondary subarea - e.g. **751x** a **751y** - will be changed from a square to a cross, the orientation the latter as well as the sizes of both portions thereof varying in dependence on the position of the planarly neighbouring graphical elements; according to an advantageous embodiment, the length of the first or second portion of said crosses is virtually equal to the spacing between the position of the given element and the position of the first or second neighbouring one along the derived spiral, the type of the first and second derived spiral being the same for the entire secondary subarea **750;** in this manner, the individual segments of the set of spirals are obtained - such as the lines **(753x, 753y)** formed by one series of graphical elements of one third secondary subarea and intersecting the lines **(754x, 754y)** formed by another series of graphical elements of that third secondary subarea - as shown in Figure 7 (b).

When the image device prepared according to the present invention is used for security and authentication purposes, it is useful to supplement the device with specific marks (striking features), such as microtext or nanotext objects, micrographics, special rotationally symmetrical structures, coded structures, moiré patterns, Fourier or Fresnel structures or the like. Such marks can be taken over from corresponding graphic templates and implemented by masking a mesh comprising optical primitives in a selected tertiary subarea, said subarea being defined by the respective reference coordinate, by the selected orientation and by the size of the template having a desired resolution. In the basic embodiment, it is possible to mask those optical primitives whose Cartesian coordinates related to a reference position correspond to the Cartesian coordinates of the given pixel within the graphical template of the respective mark. According to another embodiment, some properties of the phyllotactic model can be advantageously utilized.

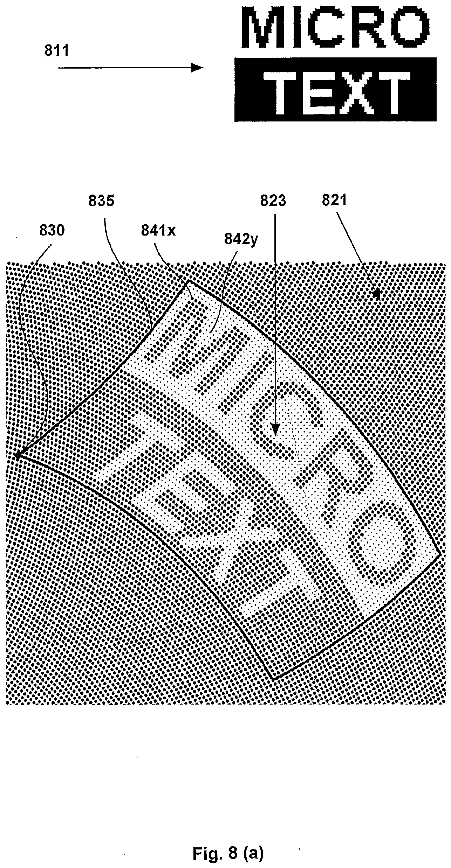

For example, when a mark corresponding to a microtext object is implemented, it may be useful to project the graphical features of the specific mark into a tertiary area having its position defined by a selected reference seed a being delimited by suitable spirals derived from the respective phyllotactic model; thus, the positions of the seeds arranged within said subarea correspond to the positions of the pixels within the graphical template of the mark. This causes a slight or even perceptible distortion of the shape of the graphical template to occur, said distortion being characteristic for the selected modifies and projected phyllotactic model. The extent of the distortion is related to several factors, the most important ones being the real size of the specific mark and the distance of the same from the pole of the model. The above example of the implementation of a microtext is schematically shown in Figure 8 (a). The pattern of the mark, namely the pattern of the microtext **811** having the size of 83 × 50 pixels in the present particular example, is implemented in the position **830** of the tertiary subarea which corresponds to the coordinates of the selected graphical element. This implementation will be carried out within the tertiary subarea **823** embedded in the primary area **821** of the graphic template delimited by the auxiliary boundary **835** of the tertiary area, said boundary extending along selected spirals of the respective phyllotactic model. The implementation of variable pixel intensity of a monochromatic pattern can be based on the size of a circular graphical element (as illustrated herein) or a corresponding optical primitive: the white pixels of the pattern correspond to small circles - e.g., one (bright) graphical element **842y** - while the black pixels of the template correspond to circles being larger in diameter - e.g., one (dark) graphical element **841x.**

In a similar way, micrographics having a greater intensity depth (grayscale) can be implemented. The variable pixel intensity of the template may be obtained in different way, as described in connection with the explanation of the individual types of secondary areas. According to one of possible advantageous embodiments, the variable pixel intensity of the template is obtained by means of different depths of the corresponding optical primitives. In this way, colourized micrographics can be obtained because various depths of the planarly neighbouring optical primitives belonging to a group make it possible to distinguish different colour tones of the reflected light when using a microscope for observing the respective tertiary subarea.

Another advantageous embodiment is based on the deployment of a more extensive microtext in a larger, visually observable subarea. In this case, it is possible to choose both the positive and the negative variant of the implementation of a microtext object in order enable the given subarea to carry additional graphical information.

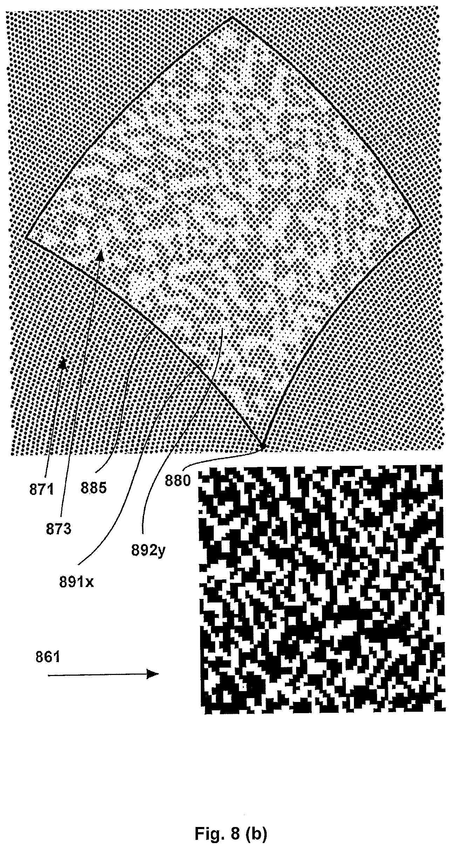

In a similar way, other kinds of striking feature can also be achieved. Figure 8 (b) shows a schematical example of an implementation of a coded structure, such as a computer generated hologram, or a Fourier structure, the pattern of the respective coded image **861** having the size of 64 × 50 pixels. The structural pattern is implemented in the tertiary area **873** located inside the primary area **871,** namely in the selected position corresponding to the tertiary subarea **880** (i.e., in the position corresponding to the selected reference graphical element). The tertiary subarea **873** is delimited by an auxiliary boundary **885** of the tertiary subarea, said boundary consisting of selected derived spirals. The individual pixels of the template, which represent a change in the phase or amplitude of the impinging light, are implemented by means of optical elements having different amplitude or phase modulation; at the level of the graphic template, the optical elements of a planar optical structure are represented by two graphical elements - one (dark) graphical element **891x** and one (bright) graphical element **892y.** In the present embodiment, the decoded image will intentionally undergo a slight distortion. According to another embodiment, it is possible to perform a compensation for said distortion, namely at the level of the implemented optical structure or at the level of the calculation of a coded image, a combination of both levels being also possible. According to a further embodiment, it is possible to modify the algorithm used for the calculation of the coded structure in order to enable the input image or decoded image of the calculated Fourier structure to be formed by the graphical seeds of the respective phyllotactic model.

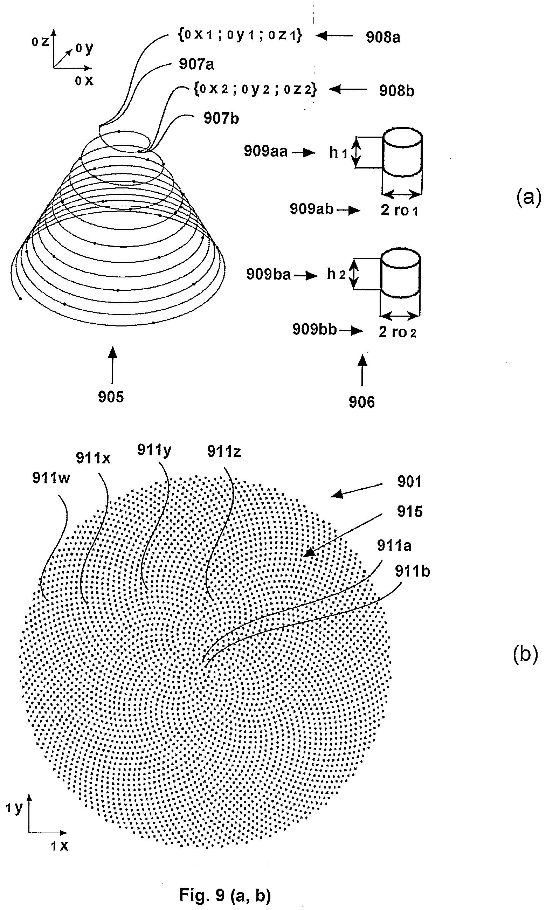

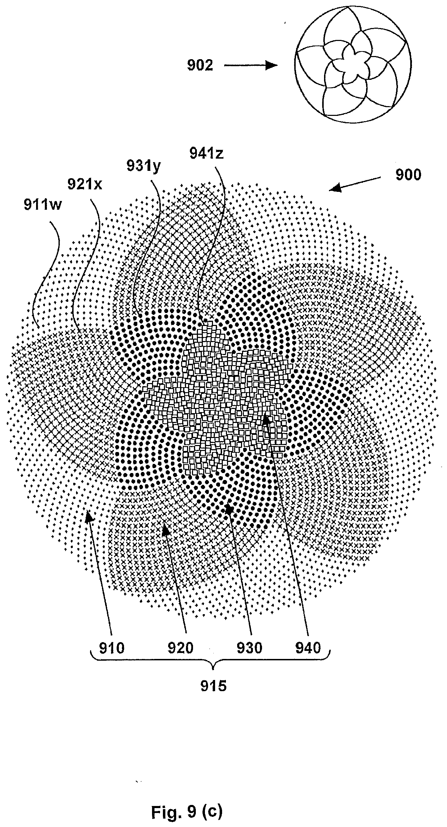

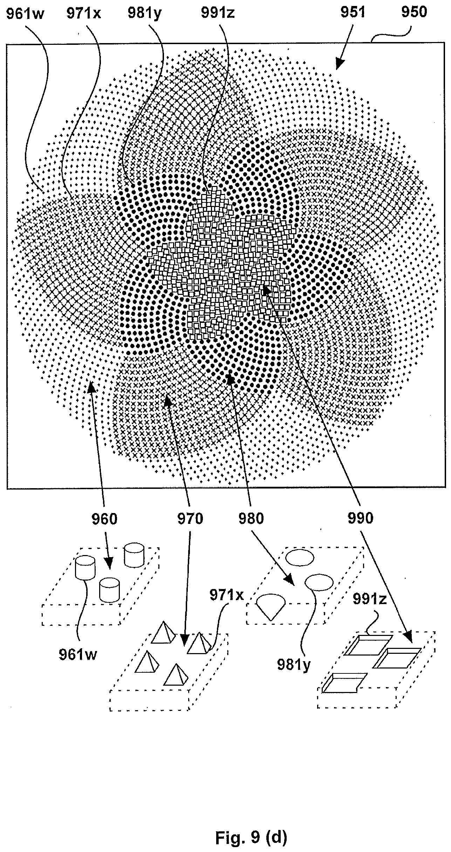

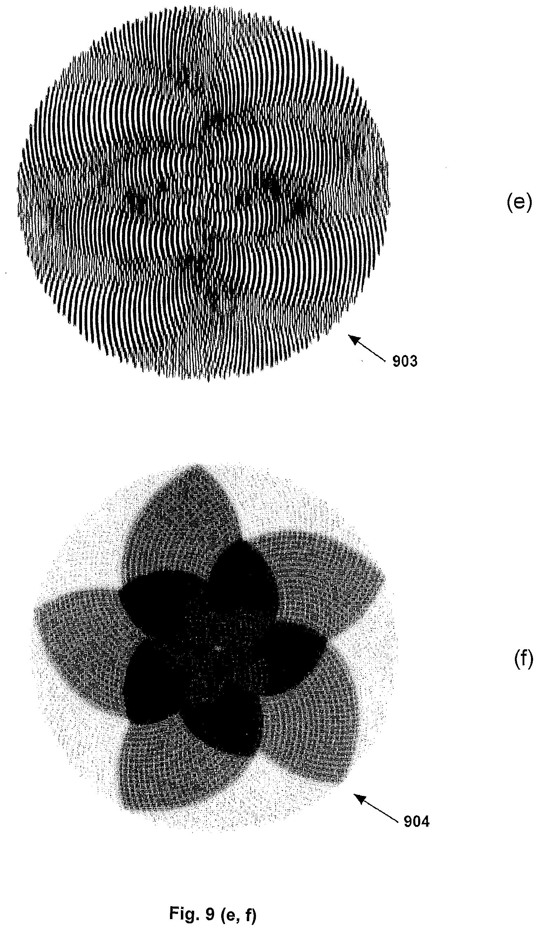

A schematical depiction of an exemplary transformation of the initial arrangement of a three-dimensional phyllotactic model **905** and a seed model **906** using a graphic pattern **902** into a planar optical structure **950** according to the present invention is shown in the illustrative Figure 9. In accordance with the three-dimensional phyllotactic model **905,** the seeds **907a, 907b** are initially arranged in a row along the initial basic spiral twining around the surface of the lateral area of a cone, the initial spatial coordinates of said seeds being **908a, 908b.** The initial attribute values **909aa,**

**909ab, 909ba, 908bb** of the seeds are defined by the seed model **906;** in this particular case, cylindrical objects having corresponding parameters are concerned, which means, for example, that the first cylinder has the depth $h_1$ and the diameter $2 \cdot ro_1$, the second cylinder has the depth $h_2$ and the diameter $2 \cdot ro_2$, and so on. The spatial arrangement of the seeds is projected into the plane of the primary graphic template **901,** wherein the graphical elements **911a, 911b** corresponding to the seeds **907a, 907b** fill in the primary area **915** of said primary graphic template **901.** After having been filled with the graphical elements **911w, 911x, 911y, 911z,** the circular primary area **915** is subdivided into four complementary subareas by means of the graphic pattern **902.** Three of the above four subareas are represented by one secondary subarea **920,** another secondary subarea **930** and still another secondary subarea **940,** all these subareas being of the third type (third secondary subareas) in the present example. The remaining portion of the primary area is the primary subarea **910.** The secondary subareas enable at least one secondary transformation to be performed in order to transform the graphical elements **911x, 911y, 911z** into the graphical elements **921x, 931y, 941z** lying in the corresponding areas; in this particular example, the attributes of the respective graphical elements are changed, For the sake of simplicity, the fills of the individual subareas have different parameters of the graphical elements in the individual illustrations. It will be readily appreciated by those skilled in the art that other filling methods are possible, such as using a combination of one primary subarea, one first secondary subarea (where the numbers of graphical elements are different before and after the execution of the secondary transformation), one second secondary subarea and one third secondary subarea.

The primary subarea **910** is filled with graphical elements having the form of small circles, a typical example being the graphical element **911w.** The depiction of the graphical elements in the secondary subareas is similar. One secondary subarea **920** is filled with cross-shaped elements, a typical example being the graphical element **921x.** Another secondary subarea **930** is filled with graphical elements having the form of larger circles, a typical example being the graphical element **931y.** Still another secondary subarea **940** is filled with graphical elements having the form of square contours, a typical example being the graphical element **941z.**

The conversion of the final graphic template **900** into the planar optical structure **950** will be carried out in that, both within the primary subarea **960** of the planar optical structure (corresponding to the primary subarea **910** of the final graphic template) and within the secondary subareas **970, 980** and **990** of the planar optical structure (corresponding to the secondary subareas **920, 930** a **940** of the final graphic template), each individual graphical element (such as **911w, 921x, 931y** and **941z)** is implemented in the form of an optical primitive (such as **961w, 971x, 981y** and **991z)** or in the form of a set of optical primitives, the respective array of optical primitives forming a relief microstructure or an alternatively optically modulated microstructure. According to another advantageous embodiment, a suitably arranged set of several optical primitives is provided instead of a single optical primitive corresponding to a graphical element.

The light impinging on the planar optical structure **950** interacts with the latter, thus creating a simultaneous visual perception of at least two different images (based on the same planar optical structure), said perception being created either immediately or following a change to the conditions of observation or illumination. One image **903** corresponds to the characteristic pattern that is based on the combination of the three-dimensional phyllotactic model **905** and the seed model **906.** At least one another image **904** corresponds to the graphic pattern **902.**

The above schematic example illustrates a further advantageous arrangement of the interface between the subareas extending along the derived spirals. Simultaneously, an advantageous possibility of utilizing a multiple quasi symmetrical arrangement of the phyllotactic model is illustrated. Both alternatives described above, namely either using an interface extending along derived spirals or using a quasi-symmetrical arrangement of the model, can be considered to represent advantageous embodiments of the optical phyllotactic image device preparation according to the present invention. Although the utilization of the above mentioned possibilities is not necessary for the implementation of the given device, a certain level of conformity between the fine structure and the visually observable image can be achieved when such methods are at least partially used.

**Industrial Applicability**

The present invention relating to a method of preparing an optical phyllotactic image device is usable in numerous different applications. Furthermore, four exemplary areas are described without limiting the scope of applicability of the present invention by persons skilled in the art.

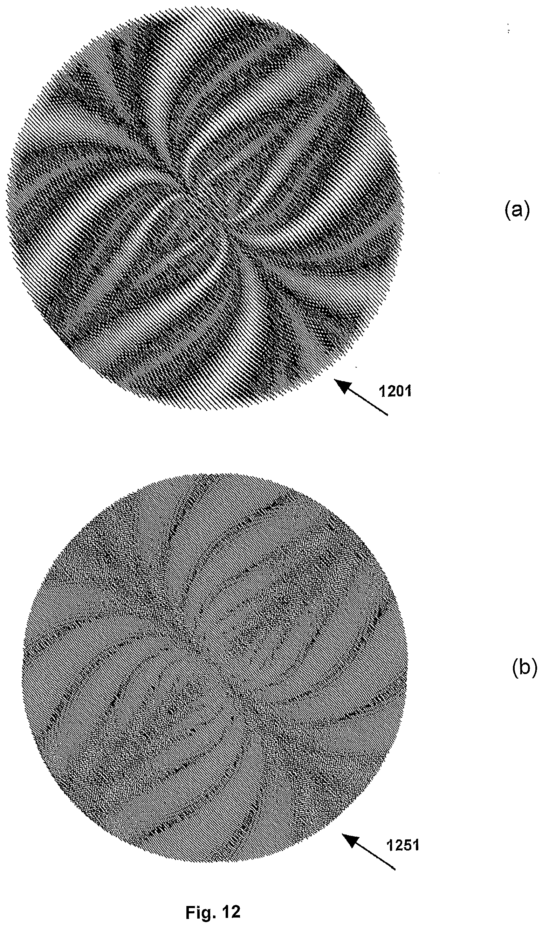

The reference to the comparison of Figure 2 (a) with Figures 2 (b) and 12 (a), respectively, makes it possible to demonstrate the difference between a simple two-dimensional left-handed phyllotactic model and an image of a phyllotactic model **1201** obtained in a low resolution. The image of the model is characterized in that the individual seeds of the model are formed by thin lines having the same size and the same orientation. This image represents a simplified characteristic pattern of one primary area of the optical phyllotactic image device prepared according to the present invention.

Figure 12 (b) shows the image of a pair of complementary phyllotactic models **1251;** this arrangement is characterized in that it is composed of two models which are - except for the sign of the constant $theta_0$ in the equation

1(b) - identical. Thus, a combination of a left-handed phyllotactic model and a right-handed one is concerned. The aforesaid figure can be also considered to be an illustration of two mutually overlapping primary areas, the respective overlap forming a quaternary subarea; in the present case, said quaternary subarea encompasses the entire surface of one or the other primary area, respectively.

An optical phyllotactic image device can be used for imaging complex phyllotactic models of plants of the individual parts thereof having a size of, for example, several centimetres, the achievable level of resolution corresponding to individual plant cells.

One of the exemplary applications of the optical phyllotactic image device prepared according to the present invention consists in using said device for securing documents, tokens of value and certificates against unauthorized duplication and counterfeiting. Similarly, such device can be used for protecting goods and brands as well as for verifying authenticity or genuineness of products.

A mass production based on known methods is also possible. In the first step, a recombination of the relief of the initial matrix of the image device is performed, e.g. using a galvanic punch. In the first step, a large-scale replication of the relief of the punch is performed, said replication consisting, e.g., in using a moulding, heat curing or ultraviolet irradiation technique for treating a thin film deposited on the surface of a foil substrate. Other possible steps can include depositing a thin metallic layer or another suitable layer on the surface of the relief, e.g. using a vapour or powder deposition technique, removing said layer using a selective etching technique, applying a foil on a substrate using a gluing or hot stamping technique etc.

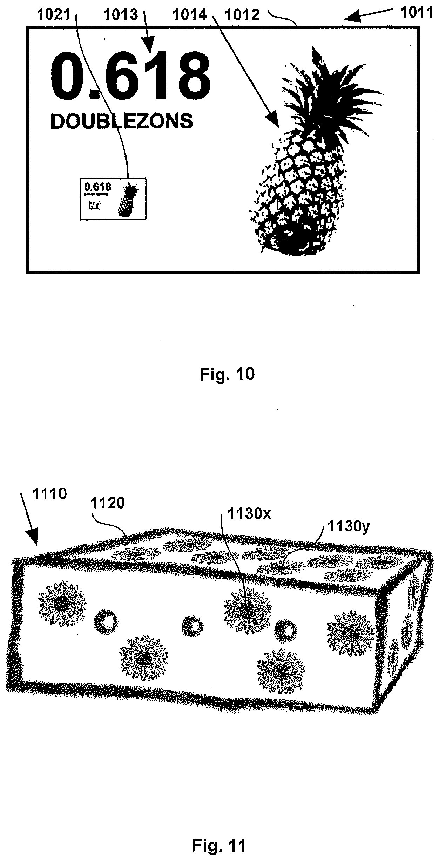

The exemplary illustration shown in Figure 10 represents a schematical sketch of the token **1011** of value that is supplemented with the optical phyllotactic image device **1021** formed by a thin foil and applied, e.g. by hot stamping, on the carrying part of the token of value, said carrying part being preferably a paper or plastic substrate **1012.** For example, the image device can assume the form of a strip, a ribbon or a medallion.

According to an advantageous embodiment, a token of value may be provided with a device having a form of a medallion a being applied on the token of value, said medallion being a diminished, true or modified replica of the graphical design of the respective token of value. Typically, such graphical design comprises text objects, numerical objects **1013** and image or graphical objects **1014.** A further advantageous embodiment may consist in that the image device includes another miniature of its own, said miniature being arranged in that portion of the device which corresponds to the location of the device on the respective token of value.

Another advantageous embodiment may consist in that the graphical implementation of the token of value itself already comprises, either partially or to the full extent, a mesh of a phyllotactic model.

Another example of application of an optical phyllotactic image device is depositing a foil comprising such device onto a wrapper of a product or article with the aim to enhance the attractiveness of such an item.

Figure 11 shows an article located in a box **1110** packed in a wrapper **1120** provided with a foil including one or more identical or different optical phyllotactic image devices **1130x, 1130y,** said foil covering discrete portions of the surface or the whole surface of said wrapper.

Another exemplary application of the optical phyllotactic image device relates to collector' items, such as coins, cards, tokens, stamps or the like, provided with such device.

**List of reference numerals**

111a - 1st seed
111b - 2nd seed
111c - 3rd seed
111ad - 30th seed (the last seed in the respective figure)
111gr - 400th seed (the last seed in the respective figure)
121x - one of the 21 derived spirals formed by each 21st seed
121y - another one of the 21 derived spirals formed by each 21st seed
134x - one of the 34 derived spirals formed by each 34th seed
134y - another one of the 34 derived spirals formed by each 34th seed
150 - area comprising the seeds of the phyllotactic model
160 - basic spiral
250 - circular area filled with the seeds of the phyllotactic model (having a radius $r = c \cdot \mathrm{sqrt}(1e4) = 100\,c$, wherein $c$ is a scale parameter)
299 - pattern of the model 250, recognizable at a very wide viewing angle
301 - arrangement (optical device on a underlying pad)
302 - underlying pad

303 - window / aperture / orifice

304 - optically variable image device

305 - light source

310 - one impinging beam

311 - reflected beam

320 - another impinging beam

321 - beam passed through

331 - deflected beams, first order

341 - deflected beams, higher harmonic orders

351 - deflected beams, negative orders

361 - deflected beams, subharmonic orders

371 - deflected beams, high harmonic orders

391 - observer's location (observing the reflected light, i.e. the beam 311)

392 - observer's location (observing the light passing through)

393 - observer's location (observing the beams 331)

394 - observer's location (observing the beams 341)

395 - observer's location (observing the beams 351)

396 - observer's location (observing the beams 361)

397 - observer's location (observing the beams 371)

401 - axonometric view of the initial three-dimensional phyllotactic model (wherein the seeds are arranged on a lateral area of a cone)

402 - axonometric view of the transformed model

403 - primary area of the graphic template (containing graphical elements corresponding to the seeds of the transformed model projected into a selected plane)

411a - first seed

411b - second seed

412 - initial basic spiral (on a lateral area of a cone)

421a - first seed after transformation

421b - second seed after transformation

422 - transformed basic spiral

431a - first graphical element (corresponding to the first seed after transformation and projection)

431b - second graphical element (corresponding to the second seed after transformation and projection)

501 - primary area (of the graphic template, cut-out)

502 - secondary subarea

503 - primary subareas (cut-out)

510x - one graphical element (belonging to the primary mesh)

521a - first derived spiral (belonging to one suitable set of derived spirals of the phyllotactic model in the primary area)

521b - second derived spiral

521m - last ($13^{th}$) derived spiral

531a - first derived spiral (belonging to another suitable set of derived spirals of the phyllotactic model in the primary area)

531b - second derived spiral

531m - last ($13^{th}$) derived spiral

541a - first derived spiral (belonging to one suitable set of derived spirals in the secondary area)

541b - second derived spiral

541m - last ($19^{th}$) derived spiral

551a - first derived spiral (belonging to another suitable set of derived spirals in the secondary area)

551b - second derived spiral

551m - last ($9^{th}$) derived spiral

601 - primary area of the graphic template (cut-out)

610 - primary subarea (cut-out)

611x - one graphical element (of the primary area)

611y - another graphical element (of the primary area)

620 - second secondary subarea (cut-out)

621x - one graphical element (belonging to a second secondary subarea)

621y - another graphical element (belonging to a second secondary subarea)

623 - second secondary web (cut-out)

624x - one line of the web extending along the first coordinate of the second secondary web

625y - one line of the web extending along the second coordinate of the second secondary web

626xy - one node (of the second secondary web; crossing of one line of the web extending along the first coordinate and one line of the web extending along the second coordinate)

630 - detailed view of an interface

710 - primary area

720 - boundary of the primary area

730 - primary subarea

731x - one graphical element (belonging to the primary subarea)

731y - another graphical element (belonging to the primary subarea)

740 - one third secondary subarea

741x - one graphical element (belonging to a third secondary subarea)

741y - another graphical element (belonging to a third secondary subarea)

742x -line formed by one series of graphical element in one third secondary subarea

742y -line formed by another series of graphical element in one third secondary subarea

750 - another third secondary subarea

751x - one graphical element (belonging to another third secondary subarea)

751x - another graphical element (belonging to another third secondary subarea)

753x -line formed by one first series of graphical element in another third secondary subarea

753y -line formed by another first series of graphical element in another third secondary subarea

754x -line formed by one second series of graphical element in another third secondary subarea

754y -line formed by another second series of graphical element in another third secondary subarea

811 - microtext (pattern)

821 - primary area (cut-out)

823 - tertiary subarea

830 - location of the tertiary subarea

835 - auxiliary boundary of the tertiary subarea

841x - one graphical element (within the tertiary subarea, dark)

842y - one graphical element (within the tertiary subarea, bright)

861 - coded image (pattern)

871 - primary area (cut-out)

873 - tertiary subarea

880 - location of the tertiary subarea

885 - auxiliary boundary of the tertiary subarea

891x - one graphical element (within the tertiary subarea, dark)

892y - one graphical element (within the tertiary subarea, bright)

900 - final graphic template

901 - primary graphic template

902 - graphic pattern

903 - one image (of the characteristic pattern)

904 - another image (corresponding to the graphic pattern)

905 - three-dimensional phyllotactic model (axonometric view)

906 - seed model (axonometric view)

907a - seed (first)

907b - seed (second)

908a - initial spatial coordinates (of the first seed)

908b - initial spatial coordinates (of the second seed)

909aa - initial value (of the first attribute of the first seed)

909ab - initial value (of the second attribute of the first seed)

909ba - initial value (of the first attribute of the second seed)

909bb - initial value (of the second attribute of the second seed)

910 - primary subarea (of the final graphic template)

911a - graphical element (in the primary area, corresponding to the first seed)

911b - graphical element (in the primary area, corresponding to the first seed)

911w - another graphical element (in the primary area)

911x - another graphical element (in the primary area)

911y - another graphical element (in the primary area)

911z - another graphical element (in the primary area)

915 - primary subarea (of both the primary graphic template and the final graphic template)

EP 3 497 491 B1

920 - one secondary subarea
921x - one graphical element (belonging to one secondary subarea)
930 - another secondary subarea
931y - one graphical element (belonging to a another secondary subarea)
940 - still another secondary subarea
941z - one graphical element (belonging to a still another secondary subarea)
950 - planar optical structure
951 - primary area (of the planar optical structure)
960 - primary subarea (of the planar optical structure)
961w - one optical primitive (in the primary subarea, corresponding to the graphical element 911w)
970 - one secondary subarea
971x - one optical primitive (in one secondary subarea, corresponding to the graphical element 921x)
980 - another secondary subarea
981y - one optical primitive (in another secondary subarea, corresponding to the graphical element 931y)
990 - still another secondary subarea
991z - one optical primitive (in still another secondary subarea, corresponding to the graphical element 941z)
1011 - token of value
1012 - substrate
1013 - numerical object
1014 - graphical object
1021 - optical phyllotactic image device
1110 - box
1120 - shell
1130x - one optical phyllotactic image device
1130y - another optical phyllotactic image device
1201 - view of a phyllotactic model
1251 - view of a pair of complementary phyllotactic models
1300 - pole of a coarse model
1302 - coarse left-handed phyllotactic model
1304 - area boundary of a coarse model
1311a - first seed (of the coarse model)
1311b - second seed (of the coarse model)
1311c - third seed (of the coarse model)
1311ad - last (thirtieth) seed (of the coarse model)
1320ad - boundary of the thirtieth seed of the coarse model

**Claims**

1. Method of preparing an optically variable image device in the form of a planar optical structure (950), comprising the following steps:

   A) at least one plurality of seeds (907a, 907b) arranged in an initial row is prepared by means of a three-dimensional phyllotactic model (905) defining locations of said seeds in an initial area and a seed model (906) defining properties of said seeds, the three-dimensional phyllotactic model is formed by a plurality $_0K$ of initial seeds, which are arranged along a basic spiral, the beginning of which forms the pole of the phyllotactic model, wherein the positions of individual seeds is specified by means of a cylindrical coordinate system $\{_0r_k\ _0theta_k\ _0z_k\}$, wherein

$$r_k = c \cdot k^{1/q}$$

$$theta_k = k \cdot theta_0$$

$$z_k = -r_k$$

22

wherein k is the order of a seed counted from the pole of the three dimensional phyllotactic model, c is the scale parameter, q is the filling parameter and $theta_0$ is rotational parameter of the three dimensional phyllotactic model, wherein each of said seeds (907a, 907b) is defined by

a) the basic order of the seed counted from the pole of the three-dimensional phyllotactic model;
b) a triplet of initial spatial coordinates (908a, 908b) derived from said three-dimensional phyllotactic model (905);
c) a set of modifiable attributes having their initial values (909aa, 909ab, 909ba, 909bb) derived from said seed model (906), the modifiable attributes being selected from the group consisting of attributes defining the form of the seed and attributes defining the optical properties of the seed,

B) subsequently, the group of seeds (907a, 907b) is projected into the plane of a primary graphic template (901) to obtain a planar primary area (915), said primary area being filled with a mesh of primary graphical elements (911a, 911b), which correspond to the initial seeds (907a, 907b),
C) further, at least one secondary subarea (920, 930, 940) is selected within said primary area (915), which comprises the mesh of graphical elements (911a, 911b, 911w, 911x, 911y, 911z), the selection being made using a graphical pattern (902), and then a secondary transformation of the mesh of graphical elements (911x, 911y, 911z) is performed in said secondary subarea (920, 930, 940) to obtain a transformed mesh of graphical elements (921x, 931y, 941z) within the secondary subarea (920, 930, 940), wherein said secondary transformation is a transformation of at least one of the following three types:

a) the density of the mesh comprising graphical elements (510x) is changed to form a first secondary subarea (502),
b) the locations of the graphical elements (621x, 621y) are transformed into nodes (626xy) of a second secondary web (623) being different from that of the original mesh to form a second secondary subarea (620),
c) the attribute values of the graphical elements (741x, 741y, 751x, 751y, 921x, 931y, 941z) are changed to form a third secondary subarea (740, 750, 920, 930, 940), the attributes of the graphical elements being selected from a group consisting of shape, dimension, orientation, translucency and lustrelessness,

D) subsequently, the obtained row of graphical elements (911w, 921x, 931y, 941z) is converted into an implementation sequence and the individual graphical elements (911w, 921x, 931y, 941z) are converted into micro and/or nano optical primitives (961w, 971x, 981y, 991z) or into sets of such primitives using a relief technique, such that an impinging light by interacting with said planar optical structure (950) creates a visual perception of one image (903) corresponding to a characteristic pattern of the respective combination of said three-dimensional phyllotactic model (905) and said seed model (906) and, simultaneously, a different visual perception of another image (904) or images corresponding to said graphic pattern (902), wherein said perception of one image (903) of the characteristic pattern is rotationally invariant and the optical primitive (961w, 971x, 981y, 991z) is at least one of the following optical primitives: cavity, protrusion, notch, mirror, lens, absorbing element, polarization element.

2. The method according to claim 1, wherein in step A) a primary transformation of said at least one series of seeds (411a, 411b) is made using a graphical pattern, said transformation being based on at least one of the following three types of modification

a) a modification of the initial spatial coordinates of the seeds (411a, 411b) into transformed spatial coordinates of the seeds (421a, 421b),
b) a modification of the shape of said initial area,
c) a modification of the initial attribute values of the seeds (411a, 411b) into modified attribute values of the seeds (421a, 421b).

3. The method according to claim 1 or 2, wherein said secondary transformation, which takes place in the step C), is a transformation of at least one of the following three types:

a) a change in the density of the mesh comprising graphical elements (510x) using derived spirals (521a, 521b, 521m, 531a, 531b, 531m) of the phyllotactic model;
b) a transformation of the locations of the graphical elements (621x, 621y) into nodes (626xy) of a second secondary web (623), which is a non-orthogonal and/or irregular web.

**4.** The method according to any of the claims 1 to 3, wherein the step C) additionally comprises a selection of at least one further subarea within at least one primary area (821, 871) and to obtain a tertiary subarea (823, 873) an object is implemented within said further subarea, the object being of a type of a microtext (811) or micrographics or of a coded image (861) of the Fourier or Fresnel type, wherein said object is implemented by transforming an orthogonal grid thereof into a mesh comprising graphical elements (841x, 842y, 891x, 892y) in said subarea, so that

> a) in at least one portion of the tertiary subarea (823, 873), the final shape of said object is distorted in order to assume a form that is characteristic for the mesh comprising the graphical elements in said portion of the tertiary subarea (823, 873) within the primary area (821, 871); and/or
> b) in at least one portion of the tertiary subarea (823, 873), said object is modified before the transformation of its orthogonal grid into a mesh comprising graphical elements, said modification enabling a distortion of said object to be compensated.

**5.** The method according to any of the claims 1 to 4, wherein the step D) comprises, in addition to said conversion, at least one of the following additional operations:

> a) merging at least two non-overlapping primary areas,
> b) providing a quaternary subarea formed by at least partial overlapping of at least two primary areas,
> c) adding an additional structure of a different type to said planar optical structure, said additional structure being formed in an area that is not in a mutually overlapping relationship with any primary area,
> d) forming a quinary subarea by at least partially mutually overlapping the planar structure of at least one primary area with at least one further structure of a different type.

**Patentansprüche**

**1.** Verfahren zur Herstellung einer optisch variablen Bildvorrichtung in Form einer planaren optischen Struktur (950), umfassend die folgenden Schritte:

> A) mindestens eine Vielzahl von in einer Initialreihe angeordneten Kerne (907a, 907b) wird mittels eines dreidimensionalen phyllotaktischen Modells (905), das die Orte der Kerne in einem Initialbereich definiert, und eines Kernmodells (906), das Eigenschaften der Kerne definiert, vorbereitet, das dreidimensionale phyllotaktische Modell durch eine Vielzahl $_0K$ von Initialkerne gebildet ist, die entlang einer Grundspirale angeordnet sind, deren Anfang den Pol des phyllotaktischen Modells bildet, wobei die Positionen einzelner Kerne durch ein Zylinderkoordinatensystem $\{_0r_k \,_0theta_k \,_0z_k\}$ spezifiziert werden, wobei

$$r_k = c \cdot k^{1/q}$$

$$theta_k = k \cdot theta_0$$

$$z_k = -r_k$$

> wobei k die Ordnung eines Kernes gezählt vom Pol des dreidimensionalen phyllotaktischen Modells, c der Skalenparameter, q der Füllparameter und $theta_0$ der Rotationsparameter des dreidimensionalen phyllotaktischen Modells ist,
> wobei jeder der Kerne (907a, 907b) definiert ist durch

> > a) die vom Pol des dreidimensionalen phyllotaktischen Modells gezählte Grundordnung der Kerne;
> > b) ein Triplett von aus dem dreidimensionalen phyllotaktischen Modell (905) abgeleiteten initialen räumlichen Koordinaten (908a, 908b);
> > c) einen Satz modifizierbarer Attribute, deren Initialwerte (909aa, 909ab, 909ba, 909bb) aus dem Kernmodell (906) abgeleitet sind, wobei die modifizierbaren Attribute aus der Gruppe bestehend aus Attributen, die die Form des Kerns definieren, und Attributen, die die optischen Eigenschaften des Kerns definieren, ausgewählt werden,

B) anschließend wird die Gruppe von Kernen (907a, 907b) in die Ebene einer primären grafischen Vorlage (901) projiziert, um einen planaren primären Bereich (915) zu erhalten, wobei der primäre Bereich mit einem Netz von den initialen Kernen (907a, 907b) entsprechenden primären grafischen Elemente (911a, 911b) gefüllt ist,

C) ferner wird es innerhalb des Primärbereichs (915) mindestens ein sekundärer Teilbereich (920, 930, 940) ausgewählt, der das Netz von grafischen Elementen (911a, 911b, 911w, 911x, 911y, 911z) umfasst, wobei die Auswahl unter Verwendung eines grafischen Musters (902) erfolgt und dann eine sekundäre Transformation des Netzes von grafischen Elementen (911x, 911y, 911z) in dem sekundären Teilbereich (920, 930, 940) durchgeführt wird, um ein transformiertes Netz von grafischen Elementen (921x, 931y, 941z) innerhalb des sekundären Teilbereichs (920, 930, 940) zu erhalten,

wobei die sekundäre Transformation eine Transformation von mindestens einem der folgenden drei Typen ist:

a) die Dichte des Netzes von grafischen Elementen (510x) wird verändert, um einen ersten sekundären Teilbereich (502) zu bilden,

b) die Orte der grafischen Elemente (621x, 621y) werden in Knoten (626xy) eines zweiten sekundären Netzes (623), das sich von denen des ursprünglichen Netzes unterscheidet, transformiert, um einen zweiten sekundären Teilbereich (620) zu bilden,

c) die Attributwerte der grafischen Elemente (741x, 741y, 751x, 751y, 921x, 931y, 941z) werden verändert, um einen dritten sekundären Teilbereich (740, 750, 920, 930, 940) zu bilden, wobei die Attribute der grafischen Elemente aus einer Gruppe bestehend aus Form, Abmessung, Ausrichtung, Lichtdurchlässigkeit und Glanzlosigkeit, ausgewählt werden,

D) anschließend wird die erhaltene Reihe grafischer Elemente (911w, 921x, 931y, 941z) in eine Implementierungssequenz umgewandelt und die einzelnen grafischen Elemente (911w, 921x, 931y, 941z) werden in mikro- und/oder nanooptische Grundelemente umgewandelt ( 961w, 971x, 981y, 991z) oder in Sätze solcher Grundelemente unter Verwendung einer Relieftechnik, so dass ein auftreffendes Licht durch Wechselwirkung mit der planaren optischen Struktur (950) eine visuelle Wahrnehmung eines Bildes (903) erzeugt, das einem charakteristischen Muster der jeweiligen Kombination des dreidimensionalen phyllotaktischen Modells (905) und des Kernmodells (906) entspricht und gleichzeitig eine unterschiedliche visuelle Wahrnehmung eines anderen Bildes (904) oder anderen Bildern, die dem grafischen Muster (902) entsprechen, wobei die Wahrnehmung von einem Bild (903) des charakteristischen Musters rotationsinvariant ist und das optische Grundelement (961w, 971x, 981y, 991z) mindestens eines der folgenden optischen Grundelemente ist: Hohlraum, Vorsprung, Kerbe, Spiegel, Linse, absorbierendes Element, Polarisationselement.

2. Verfahren nach Anspruch 1, wobei in Schritt A) eine primäre Transformation der mindestens einen Reihe von Kerne (411a, 411b) unter Verwendung eines grafischen Musters durchgeführt wird, wobei die Transformation auf mindestens einem der folgenden drei Typen der Modifikation basiert

a) eine Modifikation der initialen Raumkoordinaten der Kerne (411a, 411b) in transformierte Raumkoordinaten der Kerne (421a, 421b),
b) eine Änderung der Form des Initialbereichs,
c) eine Modifikation der initialen Attributwerte der Kerne (411a, 411b) in modifizierte Attributwerte der Kerne (421a, 421b).

3. Verfahren nach Anspruch 1 oder 2, wobei die sekundäre Transformation, die im Schritt C) stattfindet, eine Transformation mindestens einer der folgenden drei Arten ist:

a) eine Änderung der Dichte des Netzes bestehend aus grafischen Elementen (510x) unter Verwendung abgeleiteter Spiralen (521a, 521b, 521m, 531a, 531b, 531m) des phyllotaktischen Modells;
b) eine Transformation der Orte der grafischen Elemente (621x, 621y) in Knoten (626xy) eines zweiten sekundären Netzes (623), das ein nicht orthogonales und/oder unregelmäßiges Netz ist.

4. Verfahren nach einem der Ansprüche 1 bis 3, wobei der Schritt C) zusätzlich eine Auswahl mindestens eines weiteren Teilbereichs innerhalb mindestens eines Primärbereichs (821, 871) umfasst, wobei ein Objekt innerhalb des weiteren Teilbereichs implementiert wird, um ein Tertiärteilbereich (823, 873) zu erhalten, wobei das Objekt in der Art eines Mikrotextes (811) oder einer Mikrografik oder eines codierten Bildes (861) vom Fourier- oder Fresnel-Typ ist, wobei das Objekt durch Transformation eines orthogonalen Gitters davon in ein Netz bestehend aus grafischen Elementen (841x, 842y, 891x, 892y) in diesem Teilbereich implementiert wird, so dass

a) in mindestens einem Teil des tertiären Teilbereichs (823, 873) die endgültige Form des Objekts verzerrt wird, um eine Form anzunehmen, die für das Netz von den grafischen Elementen in diesem Teil des tertiären Teilbereichs (823, 873) innerhalb des Primärbereichs (821, 871) charakteristisch ist; und/oder

b) in zumindest einem Abschnitt des tertiären Teilbereichs (823, 873) das Objekt vor der Transformation seines orthogonalen Gitters in ein Netz von grafischen Elementen modifiziert wird, wobei die Modifikation eine Kompensation einer Verzerrung des Objekts ermöglicht.

**5.** Verfahren nach einem der Ansprüche 1 bis 4, wobei der Schritt D) zusätzlich zu der Umwandlung mindestens einen der folgenden zusätzlichen Vorgänge umfasst:

a) Verknüpfung von mindestens zwei sich nicht überschneidenden Primärbereichen,

b) Bereitstellen eines quartären Teilbereichs, das durch zumindest teilweise Überlappung von mindestens zwei Primärbereichen gebildet wird,

c) Hinzufügen einer zusätzlichen Struktur eines anderen Typs zu der planaren optischen Struktur, wobei die zusätzliche Struktur in einem Bereich gebildet wird, der mit keinem Primärbereich in einer gegenseitigen Überlappungsbeziehung steht,

d) Bildung eines quinären Teilbereichs durch zumindest teilweise gegenseitige Überlappung der flächigen Struktur zumindest eines Primärbereichs mit zumindest einer weiteren Struktur unterschiedlichen Typs.

**Revendications**

**1.** Procédé de préparation d'un dispositif d'image optiquement variable en forme d'une structure (950) planaire optique, comprenant les étapes suivantes :

A) au moins une pluralité de graines (907a, 907b) disposées dans une rangée initiale est préparée au moyen d'un modèle (905) phyllotaxique tridimensionnel définissant les emplacements des graines dans une région initiale et un modèle (906) de graines définissant les propriétés des graines, le modèle phyllotaxique tridimensionnel étant formé par une pluralité $_0K$ des graines initiales qui sont disposées le long d'une spirale de base, et le début de la spirale de base forme un pôle du modèle phyllotaxique, où les positions des graines individuelles sont spécifiées au moyen d'un système cylindrique de coordonnées $\{_0r_k \,_0theta_k \,_0z_k\}$, où

$$r_k = c \cdot k^{1/q}$$

$$theta_k = k \cdot theta_0$$

$$z_k = -r_k$$

où k est l'ordre d'une graine comptée à partir du pôle du modèle phyllotaxique tridimensionnel, c est le paramètre d'échelle, q est le paramètre de remplissage et $theta_0$ est le paramètre de rotation du modèle phyllotaxique tridimensionnel,

où chacune des graines (907a, 907b) est définie par

a) l'ordre fondamental de la graine compté à partir du pôle du modèle phyllotaxique tridimensionnel ;

b) un triplet de coordonnées (908a, 908b) initiales spatiales dérivées du modèle (905) phyllotaxique tridimensionnel ;

c) un ensemble d'attributs modifiables ayant leurs valeurs (909aa), 909ab, 909ba, 909bb) initiales dérivées du modèle (906) de graines, les attributs modifiables étant sélectionnés dans le groupe qui est constitué d'attributs définissant la forme de la graine et d'attributs définissant les propriétés optiques de la graine,

B) par la suite, le groupe des graines (907a, 907b) est projeté sur un plan d'un modèle (901) graphique primaire afin d'obtenir une région (915) planaire primaire, la région primaire étant remplie d'une maille d'éléments (911a, 911b) graphiques primaires qui correspondent aux graines (907a, 907b) initiales,

C) par la suite, au moins une sous-région (920, 930, 940) secondaire est sélectionnée dans la région (915) primaire, qui comprend la maille d'éléments (911a, 911b, 911w, 911x, 911y, 911z) graphiques, la sélection étant effectuée au moyen d'un motif (902) graphique est puis une transformation secondaire de la maille d'éléments (911x, 911y, 911z) graphiques est effectuée dans la sous-région (920, 930, 940) secondaire afin d'obtenir une maille transformée d'éléments (921x, 931y, 941z) graphiques dans la sous-région (920, 930, 940) secondaire, où la transformation secondaire est une transformation d'au moins un des types suivants :

a) la densité de la maille comprenant des éléments (510x) graphiques est changée pour former une première sous-région (502) secondaire,

b) les emplacements des éléments (621x, 621y) graphiques sont transformés en noeuds (626xy) d'un deuxième réseau (623) secondaire étant différent de celui de la maille originale pour former une deuxième sous-région (620) secondaire,

c) les valeurs d'attributs des éléments (741x, 741y, 751x, 751y, 921x, 931y, 941z) graphiques sont changées pour former une troisième sous-région (740, 750, 920, 930, 940) secondaire, les attributs des éléments graphiques étant sélectionnés dans le groupe qui est constitué d'une forme, une dimension, une orientation, une translucidité et une matité,

D) par la suite, la rangée obtenue des éléments (911w, 921x, 931y, 941z) graphiques est convertie en séquence d'implémentation et les éléments (911w, 921x, 931y, 941z) graphiques individuels sont convertis en éléments primitifs (961w, 971x, 981y, 991z) optiques micro et/ou nano ou en ensembles de tels éléments primitifs au moyen d'une technique du relief de telle sorte que la lumière incidente, par interaction avec la structure (950) optique planaire, crée une perception visuel d'une image (903) correspondant à un motif caractéristique de la combinaison respective du modèle (905) phyllotaxique tridimensionnel et le modèle (906) de graines et, en même temps, une perception visuel différent d'une autre image (904) ou d'autres images correspondant au motif (902) graphique, où la perception d'une image (903) du motif caractéristique est invariante par rotation est l'élément primitif (961w, 971x, 981y, 991z) optique est au moins un des éléments primitifs optiques suivants : une cavité, une saillie, une encoche, un miroir, une lentille, un élément absorbant, un élément de polarisation.

2. Procédé selon la revendication 1, où dans l'étape A) une transformation primaire de ladite au moins une série des graines (411a, 411b) est effectuée au moyen d'un motif graphique, la transformation étant basée sur au moins un des trois types suivants de modification :

a) une modification des coordonnées initiales spatiales des graines (411a, 411b) dans des coordonnées spatiales transformées des graines (421a, 421b),

b) une modification de la forme de la région initiale,

c) une modification de valeurs d'attributs initiales des graines (411a, 411b) dans des valeurs d'attributs modifiées des graines (421a, 421b).

3. Procédé selon la revendication 1 ou 2, où la transformation secondaire qui a lieu dans l'étape C) est une transformation d'au moins un des types suivants :

a) un changement de la densité de la maille comprenant des éléments (510x) graphiques utilisant des spirales (521a, 521b, 521m, 531a, 531b, 531m) dérivées du modèle phyllotaxique ;

b) une transformation des emplacements des éléments (621x, 621y) graphiques en noeuds (626xy) d'un deuxième réseau (623) secondaire qui est un réseau non orthogonal et/ou irrégulier.

4. Procédé selon l'une quelconque des revendications 1 à 3, où l'étape C) comprend de plus une sélection d'au moins une autre sous-région dans au moins une région (821, 871) primaire et, pour obtenir une sous-région (823, 873) tertiaire, un objet est mis en oeuvre dans l'autre sous-région, l'objet étant d'un type d'un microtexte (811) ou une micrographie ou une image (861) codée du type Fourier ou Fresnel, où ledit objet est mis en oeuvre en transformant sa grille orthogonale en maille qui comprend des éléments (841x, 842y, 891x, 892y) graphiques dans la sous-région, de telle sorte que

a) dans au moins une partie de la sous-région (823, 873) tertiaire, la forme finale de l'objet soit déformée pour prendre une forme qui est caractéristique pour la maille comprenant les éléments graphiques dans la partie de la sous-région (823, 873) tertiaire dans la région (821, 871) primaire ; et/ou

b) dans au moins une partie de la sous-région (823, 873) tertiaire, ledit objet soit modifié avant la transformation de sa grille orthogonale en maille comprenant des éléments graphiques, ladite modification permettant une déformation de l'objet à être compensé.

**5.** Procédé selon l'une quelconque des revendications 1 à 4, où l'étape D) comprend, en plus de la conversion, au moins une des opérations suivantes :

a) une fusion d'au moins deux régions primaires sans chevauchement,
b) une fourniture d'une sous-région quaternaire formée d'un chevauchement au moins partiel d'au moins deux régions primaires,
c) une addition d'une structure supplémentaire d'un type différent à la structure optique planaire, la structure supplémentaire étant formée dans une région qui n'est pas dans une relation de chevauchement mutuel avec n'importe quelle région primaire,
d) une formation d'une région quinaire par chevauchement mutuel au moins partiel de la structure planaire d'au moins une région primaire avec au moins une autre structure d'un type différent.

**Fig. 1 Prior Art**

(a)

250

299

(b)

Fig. 2 Prior Art

305

391

311

310 320

304

302 303 302

301

321

392

(a)

393

394 396

305

331

341 361

397 310 311 391

371 351 395

304

(b)

**Fig. 3 Prior Art**

**Fig. 4**

510x

(a)

501

531b  531a  510x  521a

521b

521m

(b)

503  502  501  531m

Fig. 5 (a, b)

(c)

(d)

Fig. 5 (c, d)

(a)

(b)

Fig. 6

720    710

740    750

730

(a)

741x
741y

742x
742y

753x
753y

754x

754y

740

730    731x
731y

750

751x

751y

(b)

Fig. 7

811 →

MICRO
TEXT

830    835    841x    842y    823    821

Fig. 8 (a)

**Fig. 8 (b)**

Fig. 9 (a, b)

Fig. 9 (c)

961w    971x    981y    991z                  951        950

960        970        980              990

961w                971x

                981y        991z

Fig. 9 (d)

(e)

(f)

Fig. 9 (e, f)

Fig. 10

Fig. 11

(a)

1201

(b)

1251

Fig. 12

**Fig. 13**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2006013215 A1
- WO 2014124829 A1
- EP 2879883 A1
- EP 2180358 A
- DE 102007009646 A1

### Non-patent literature cited in the description

- **VOGEL, H.** A Better Way to Construct the Sunflower Head. *Mathematical Biosciences,* 1979, vol. 44, 179-189
- Some Other Gratings: Benchmarks for Large-Area E-Beam Nanopatterning. **MELUZIN, P. et al.** NANO-CON 2014, 6th International conference proceedings. TANGER, 2014
- **RENESSEE ; RUDOLF L. VAN.** Optical Document Security. Artech House, 2005, 386